# EUROPEAN PATENT APPLICATION

(11) **EP 4 678 468 A1**
(43) Date of publication of application: **14.01.2026**
(21) Application number: 24766655.5
(22) Date of filing: 09.01.2024
(51) Int. Cl.: B60L 58/27, B60H 1/22, B60L 1/00, B60L 9/18, B60L 50/60, B60L 53/14, H01M 10/613, H01M 10/615, H01M 10/625, H01M 10/633, H01M 10/6556, H01M 10/6568, H01M 10/6571

(54) **HEAT MANAGEMENT SYSTEM**

(30) Priority: 09.03.2023 JP 2023036643; 21.11.2023 JP 2023197449
(71) Applicant: TOYOTA JIDOSHA KABUSHIKI KAISHA, Toyota-shi Aichi 471-8571 (JP)
(72) Inventor: SUZUKI, Tomoaki, Toyota-shi, Aichi 471-8571 (JP)
(74) Representative: D Young & Co LLP
(86) International application number: PCT/JP2024/000145
(87) International publication number: WO 2024/185280

(57) **Abstract**

In a thermal management system (1), during temperature rise control for a power storage device (173), a switching device (180, 190) is controlled such that a first connection flow path (30) connecting a first flow path (170b), a second flow path (130b), and a fourth flow path (170a) is formed, and a radiator (122) is separated and independent from the first connection flow path (30).

## Description

### TECHNICAL FIELD

The present disclosure relates to a thermal management system.

### BACKGROUND ART

Japanese Patent Laying-Open No. 2010-272395 (PTL 1) discloses an electrically powered vehicle. The electrically powered vehicle includes a power storage device (a battery), an inverter, a motor, and a controller. The power storage device is connected to the inverter. The inverter is connected to the motor. The controller controls switching of the inverter to control the current in the power storage device. Thereby, the controller controls the heat generated due to the power loss in an internal resistance in the power storage device. As a result, the controller can perform temperature rise control (self-heating of the power storage device) to raise the temperature of the power storage device by the current in the power storage device.

### CITATION LIST

### PATENT LITERATURE

PTL 1: Japanese Patent Laying-Open No. 2010-272395

### SUMMARY OF INVENTION

### TECHNICAL PROBLEM

In electrical equipment such as an electrically powered vehicle, it may be important to effectively utilize the heat from a drive device including an inverter and a motor. Further, it is desired to efficiently raise the temperature of the power storage device. In other words, it is desired to efficiently raise the temperature of the power storage device while allowing effective use of the heat generated from the drive device.

The present disclosure has been made to solve the above-described problem, and an object thereof is to provide a thermal management system capable of efficiently raising a temperature of a power storage device while allowing effective use of heat generated from a drive device.

### SOLUTION TO PROBLEM

A thermal management system according to a first aspect of the present disclosure is a thermal management system provided in electrical equipment and including: a first flow path, a second flow path, a third flow path, and a fourth flow path, a heat medium being able to flow through the first flow path, the second flow path, the third flow path, and the fourth flow path; a power storage device that exchanges heat with the heat medium in the first flow path; a drive device that exchanges heat with the heat medium in the second flow path and is capable of generating drive power; a radiator provided in the third flow path; a chiller device provided in the fourth flow path; and a switching device that is capable of switching a state of connection between the first flow path, the second flow path, the third flow path, and the fourth flow path. A flow path circuit is formed in which the first flow path, the second flow path, and the fourth flow path are connected to form a first connection flow path, and the radiator is separated and independent from the connection flow path, and the flow path circuit serves as a temperature rising circuit. In the thermal management system, when the power storage device is raised in temperature, the switching device forms the temperature rising circuit. The state in which the radiator is separated and independent from the first connection flow path means the state in which the heat medium flowing through the first connection flow path does not flow through the radiator.

In the thermal management system according to the first aspect of the present disclosure, as described above, when the power storage device is raised in temperature, the first connection flow path connecting the first flow path, the second flow path, and the fourth flow path is formed, and the radiator is separated and independent from the first connection flow path. Thereby, the power storage device can be raised in temperature with use of the heat generated in the drive device. Further, the heat generated in the drive device can be suppressed from being taken away by a radiator or the like not involved in raising the temperature of the power storage device. As a result, the power storage device can be efficiently raised in temperature while allowing effective use of the heat generated from the drive device.

In the thermal management system according to the first aspect, preferably, the electrical equipment is an electrically powered vehicle. Further, the power storage device is raised in temperature when a traveling system of the electrically powered vehicle is activated. According to such a configuration, the power storage device can be easily raised in temperature at the time when traveling of the electrically powered vehicle is started. As a result, the traveling performance of the electrically powered vehicle can be easily set at a certain level or more at the time when traveling of the electrically powered vehicle is started.

In the thermal management system according to the first aspect, preferably, the power storage device is configured to be capable of external charging with charging power supplied from a charging facility external to the electrical equipment. Further, the power storage device is raised in temperature such that a temperature of the power storage device becomes equal to or higher than a prescribed temperature when the external charging is started. According to such a configuration, the power storage device can be easily raised in temperature at the time when external charging is started. As a result, at the time when external charging is started, each of the charging speed and the charging efficiency can be easily set at a certain level or more. Note that external charging is started at a timing to start supplying the charging power to the power storage device.

The thermal management system according to the first aspect preferably includes a pump provided in the second flow path to circulate the heat medium. Further, when the power storage device is raised in temperature, an output of the pump is increased with time. According to such a configuration, the output of the pump can be increased after the temperature of the heat medium in the second flow path becomes relatively high over time. As a result, cooling of the power storage device by the heat medium can be suppressed.

The thermal management system according to the first aspect preferably includes: a first temperature sensor that detects a temperature of the power storage device; and a second temperature sensor that detects a temperature of the heat medium in the second flow path. Further, when the power storage device is raised in temperature, and in a case where a value detected by the second temperature sensor is larger than a value detected by the first temperature sensor, the switching device forms the temperature rising circuit. According to such a configuration, cooling of the power storage device by the heat medium in the second flow path can be more reliably suppressed.

In the thermal management system according to the first aspect, preferably, the electrical equipment is an electrically powered vehicle. The chiller device is configured to exchange heat with an air conditioning circuit that adjusts a room temperature of the electrically powered vehicle. Further, when the power storage device is raised in temperature, and in a case where there is a request for heating with use of the air conditioning circuit and an outside air temperature is equal to or lower than a prescribed threshold value, the switching device forms the temperature rising circuit. According to such a configuration, when the outside air temperature is equal to or lower than the prescribed threshold value, heating can be activated using the chiller device with use of the heat generated from the drive device and the power storage device.

In this case, preferably, by the controller, the switching device forms the temperature rising circuit in a case where the outside air temperature becomes equal to or lower than the prescribed threshold value when the power storage device is raised in temperature in a state in which a second connection flow path and a third connection flow path are separated and independent from each other. In the second connection flow path, the first flow path and the second flow path are connected to each other. In the third connection flow path, the third flow path and the fourth flow path are connected to each other. According to such a configuration, when the outside air temperature becomes equal to or lower than the prescribed threshold value, the heating control with use of the radiator can be changed to the heating control with use of the heat of the drive device or the like. As a result, the heating efficiency can be easily ensured even when the outside air temperature becomes equal to or lower than the prescribed threshold value.

A thermal management system according to the second aspect of the present disclosure is a thermal management system provided in electrical equipment and including: a compressor that compresses a working medium; an expansion valve that expands the working medium discharged from the compressor; a heat exchanger that exchanges heat between a heat medium and the working medium flowing out of the expansion valve; a first circulation flow path through which the working medium circulates, the first circulation flow path connecting in an order of the compressor, the expansion valve, and the heat exchanger; a power storage device connected to the first circulation flow path to exchange heat with the working medium flowing through a portion between the compressor and the expansion valve in the first circulation flow path; a power storage device bypass flow path connected to the first circulation flow path to bypass the power storage device; a condenser that condenses the working medium discharged from the compressor, the condenser being provided in the power storage device bypass flow path; a pump that pressurizes the heat medium flowing out of the heat exchanger; and a radiator that cools the heat medium discharged from the pump; a second circulation flow path through which the heat medium circulates, the second circulation flow path connecting in an order of the heat exchanger, the pump, and the radiator; a drive device that supplies drive power to the electrical equipment, the drive device being connected to the second circulation flow path to exchange heat with the heat medium flowing through a portion between the radiator and the heat exchanger in the second circulation flow path; a radiator bypass flow path connected to the second circulation flow path to bypass the radiator; and a switching device that is capable of switching a flow path through which the heat medium flows. When the power storage device is raised in temperature, the switching device disconnects the radiator from the second circulation flow path. The compressor is activated upon satisfaction of a heat receiving condition on which the working medium receives heat from the heat medium in the heat exchanger.

In the thermal management system according to a second aspect of the present disclosure, as described above, the radiator is separated from the second circulation flow path when the power storage device is raised in temperature. Thereby, the power storage device can be raised in temperature with use of the heat generated in the drive device while suppressing the heat generated in the drive device from being taken away by the radiator not involved in raising the temperature of the power storage device. Further, in the thermal management system according to the second aspect of the present disclosure, as described above, the compressor is activated upon satisfaction of the heat receiving condition on which the working medium receives heat from the heat medium in the heat exchanger. This makes it possible to suppress the heat of the working medium from being taken away in the heat exchanger, so that the power storage device can be more efficiently raised in temperature.

In the thermal management system according to the second aspect, preferably, the heat receiving condition is set as a condition that a prescribed time period has elapsed since activation of at least one of the pump and the drive device. According to such a configuration, after the drive device is raised in temperature by a prescribed temperature or more to thereby raise the temperature of the heat medium by a prescribed temperature or more, heat can be exchanged between the working medium and the heat medium in the heat exchanger. As a result, the heat of the working medium can be suppressed from being taken away by the heat medium.

In the thermal management system according to the second aspect, preferably, the heat receiving condition is set as a condition that a temperature of the heat medium flowing into the heat exchanger is equal to or higher than a temperature of the working medium flowing into the heat exchanger. According to such a configuration, the heat of the working medium can be more reliably suppressed from being taken away by the heat medium.

A thermal management system according to a third aspect of the present disclosure is a thermal management system provided in electrical equipment and including: a first flow path, a second flow path, a third flow path, and a fourth flow path, a heat medium being able to flow through the first flow path, the second flow path, the third flow path, and the fourth flow path; a power storage device that exchanges heat with the heat medium flowing through the first flow path; a drive device that exchanges heat with the heat medium flowing through the second flow path and supplies drive power to the electrical equipment; a radiator provided in the third flow path; a chiller provided in the fourth flow path; and a switching device that is capable of switching a state of connection between the first flow path, the second flow path, the third flow path, and the fourth flow path. The first flow path and the second flow path are connected to the switching device to be parallel to each other. When the power storage device is raised in temperature, the switching device forms a first circuit in which the heat medium circulates through the first flow path, the fourth flow path, and the switching device, forms a second circuit in which the heat medium circulates through the second flow path, the fourth flow path, and the switching device, and separates the third flow path from the first circuit and the second circuit.

In the thermal management system according to the third aspect of the present disclosure, as described above, when the power storage device is raised in temperature, the first circuit is formed in which the heat medium circulates through the first flow path, the fourth flow path, and the switching device, and the second circuit is formed in which the heat medium circulates through the second flow path, the fourth flow path, and the switching device, and further, the third flow path is separated from the first circuit and the second circuit. Thereby, the heat medium in the first circuit and the heat medium in the second circuit exchange heat with each other in the switching device and the fourth flow path. Therefore, the power storage device can be raised in temperature with use of the heat generated in the drive device. Further, separating the third flow path from the first circuit and the second circuit makes it possible to suppress the heat generated in the drive device from being taken away by the radiator not involved in raising the temperature of the power storage device.

In the thermal management system according to the third aspect, the thermal management system preferably includes: a first pump provided in the first flow path; and a second pump provided in the second flow path. The second pump is activated upon satisfaction of a heat receiving condition on which the power storage device receives heat from the heat medium. According to such a configuration, the power storage device can be more efficiently raised in temperature.

In this case, preferably, the heat receiving condition is set as a condition that a prescribed time period has elapsed since activation of the drive device. According to such a configuration, heat can be exchanged between the heat medium in the first circuit and the heat medium in the second circuit after the drive device is raised in temperature by a prescribed temperature or more.

In the thermal management system according to the third aspect, preferably, the heat receiving condition is set as a condition that a temperature of the heat medium flowing through a portion on a downstream side of the drive device in the second flow path is equal to or higher than a temperature of the power storage device. According to such a configuration, the heat of the heat medium in the first circuit can be more reliably suppressed from being taken away by the heat medium in the second circuit.

### ADVANTAGEOUS EFFECTS OF INVENTION

According to the present disclosure, the power storage device can be efficiently raised in temperature while allowing effective use of the heat generated from the drive device.

### BRIEF DESCRIPTION OF DRAWINGS

Fig. 1 is a diagram showing an electrically powered vehicle on which a thermal management system according to a first embodiment is mounted.
Fig. 2 is a diagram showing a configuration of the thermal management system according to the first embodiment.
Fig. 3 is a diagram showing a detailed configuration of the thermal management system according to the first embodiment.
Fig. 4 is a diagram showing a first communication pattern of a thermal management circuit according to the first embodiment.
Fig. 5 is a diagram showing a second communication pattern of the thermal management circuit according to the first embodiment.
Fig. 6 is a flowchart illustrating control of the thermal management system according to the first embodiment.
Fig. 7 is a flowchart illustrating first control in step S170 in Fig. 6.
Fig. 8 is a flowchart illustrating second control in step S170 in Fig. 6.
Fig. 9 is a diagram showing a configuration of a thermal management system according to a second embodiment.
Fig. 10 is a diagram showing a detailed configuration of the thermal management system according to the second embodiment.
Fig. 11A is a diagram showing a first communication pattern of a thermal management circuit according to the second embodiment.
Fig. 11B is a diagram corresponding to Fig. 11A and showing a schematic configuration of the thermal management circuit.
Fig. 12A is a diagram showing a second communication pattern of the thermal management circuit according to the second embodiment.
Fig. 12B is a diagram corresponding to Fig. 12A and showing a schematic configuration of the thermal management circuit.
Fig. 13 is a flowchart illustrating control of the thermal management system according to the second embodiment.
Fig. 14 is a flowchart illustrating first control in step S270 in Fig. 13.
Fig. 15 is a flowchart illustrating second control in step S270 in Fig. 13.
Fig. 16 is a diagram showing a configuration of a thermal management system according to a third embodiment.
Fig. 17 is a diagram showing a detailed configuration of the thermal management system according to the third embodiment.
Fig. 18 is a diagram showing a first communication pattern of a thermal management circuit according to the third embodiment.
Fig. 19 is a diagram showing a second communication pattern of the thermal management circuit according to the third embodiment.
Fig. 20 is a flowchart illustrating control of the thermal management system according to the third embodiment.
Fig. 21 is a diagram showing a configuration of a thermal management system according to a fourth embodiment.
Fig. 22 is a diagram showing a detailed configuration of the thermal management system according to the fourth embodiment.
Fig. 23A is a diagram showing a first communication pattern of a thermal management circuit according to the fourth embodiment.
Fig. 23B is a diagram corresponding to Fig. 23A and showing a schematic configuration of the thermal management circuit.
Fig. 24A is a diagram showing a second communication pattern of the thermal management circuit according to the fourth embodiment.
Fig. 24B is a diagram corresponding to Fig. 24A and showing a schematic configuration of the thermal management circuit.
Fig. 25 is a flowchart illustrating control of the thermal management system according to the fourth embodiment.
Fig. 26 is a flowchart illustrating control of a thermal management system according to modifications of the first to fourth embodiments.
Fig. 27A is a diagram showing a configuration of a thermal management circuit according to a first modification of the second embodiment.
Fig. 27B is a diagram corresponding to Fig. 27A and showing a schematic configuration of the thermal management circuit.
Fig. 28 is a diagram showing a configuration of a thermal management circuit according to a first modification of the third embodiment.
Fig. 29 is a diagram showing a configuration of a thermal management circuit according to a second modification of the third embodiment.
Fig. 30 is a diagram showing a configuration of a thermal management circuit according to a third modification of the third embodiment.
Fig. 31 is a diagram showing a configuration of a thermal management circuit according to a modification of the first embodiment.
Fig. 32 is a diagram showing a configuration of a thermal management circuit according to a second modification of the second embodiment.
Fig. 33 is a diagram showing a configuration of a thermal management circuit according to a fourth modification of the third embodiment.
Fig. 34 is a diagram showing a configuration of a thermal management circuit according to the modification of the fourth embodiment.
Fig. 35 is a diagram showing a circuit configuration including a battery, a converter, an inverter, and a motor.
Fig. 36 is a diagram showing a configuration of a thermal management system according to a fifth embodiment.
Fig. 37 is a flowchart illustrating a first example of a heat receiving condition to activate a compressor according to the fifth embodiment.
Fig. 38 is a flowchart illustrating a second example of the heat receiving condition to activate the compressor according to the fifth embodiment.
Fig. 39 is a diagram showing a configuration of a thermal management system according to a sixth embodiment.
Fig. 40 is a flowchart illustrating a first example of a heat receiving condition to activate a second pump according to the sixth embodiment.
Fig. 41 is a flowchart illustrating a second example of the heat receiving condition to activate the second pump according to the fifth embodiment.

### DESCRIPTION OF EMBODIMENTS

Hereinafter, the first embodiment of the present disclosure will be described in detail with reference to the accompanying drawings, in which the same or corresponding portions are denoted by the same reference characters, and the description thereof will not be repeated.

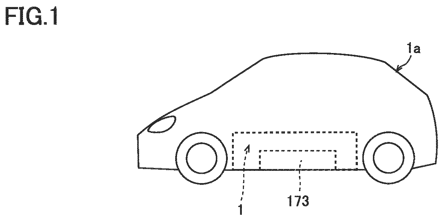

The following describes an example of a configuration in which a thermal management system according to the present disclosure is mounted in an electrically powered vehicle 1a (see Fig. 1). Electrically powered vehicle 1a is preferably a vehicle on which a battery 173 for traveling is mounted and is, for example, a battery electric vehicle (BEV). Electrically powered vehicle 1a may be a hybrid electric vehicle (HEV), a plug-in hybrid electric vehicle (PHEV), or a fuel cell electric vehicle (FCEV). However, the intended use of the thermal management system according to the present disclosure is not limited to that for vehicles. Electrically powered vehicle 1a is an example of the "electrical equipment" in the present disclosure.

### [First Embodiment]

### <Overall Configuration>

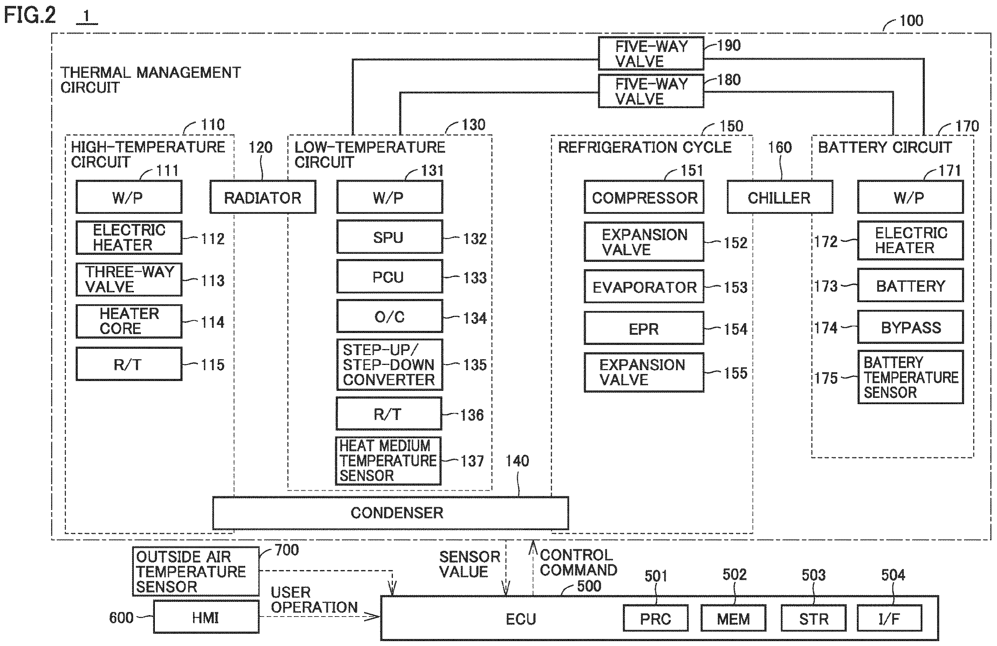

Fig. 2 is a diagram showing an example of an overall configuration of a thermal management system 1 according to the first embodiment in the present disclosure. Thermal management system 1 includes a thermal management circuit 100, an electronic control unit (ECU) 500, a human machine interface (HMI) 600, and an outside air temperature sensor 700.

Thermal management circuit 100 is configured such that a heat medium circulates therethrough. Thermal management circuit 100 includes, for example, a high-temperature circuit 110, a radiator 120, a low-temperature circuit 130, a condenser 140, a refrigeration cycle 150, a chiller 160, a battery circuit 170, and five-way valves 180 and 190. Each of five-way valves 180 and 190 is an example of the "switching device" in the present disclosure. Chiller 160 is an example of the "chiller device" in the present disclosure.

High-temperature circuit 110 includes, for example, a water pump (W/P) 111, an electric heater 112, a three-way valve 113, a heater core 114, and a reservoir tank (R/T) 115. Heater core 114 is an example of the "air conditioning circuit" in the present disclosure.

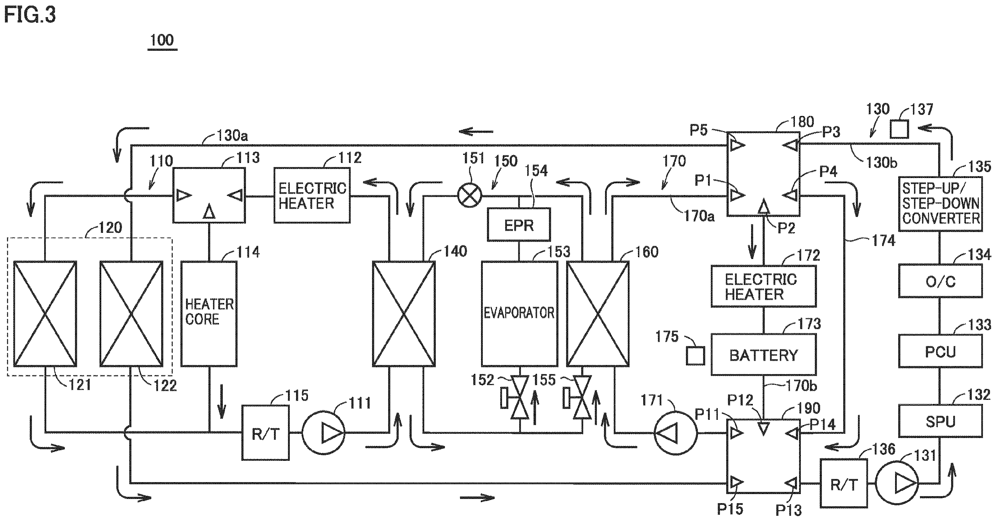

Radiator 120 is connected to (i.e., shared among) both high-temperature circuit 110 and low-temperature circuit 130. Radiator 120 includes a high-temperature (HT) radiator 121 and a low-temperature (LT) radiator 122 (see Fig. 3 for both of the radiators). In low-temperature radiator 122, the heat medium flowing through low-temperature circuit 130 exchanges heat with the outside air. Low-temperature radiator 122 is an example of the "radiator" in the present disclosure.

Low-temperature circuit 130 includes, for example, a water pump 131, a smart power unit (SPU) 132, a power control unit (PCU) 133, an oil cooler (O/C) 134, a step-up/step-down converter 135, a reservoir tank 136, and a heat medium temperature sensor 137. PCU 133 and oil cooler 134 each are an example of the "drive device" in the present disclosure. Water pump 131 and heat medium temperature sensor 137 are examples of the "pump" and the "second temperature sensor", respectively, in the present disclosure.

Condenser 140 is connected to both high-temperature circuit 110 and refrigeration cycle 150.

Refrigeration cycle 150 includes, for example, a compressor 151, an expansion valve 152, an evaporator 153, an evaporative pressure regulator (EPR) 154, and an expansion valve 155.

Chiller 160 is connected to both refrigeration cycle 150 and battery circuit 170. In chiller 160, the heat medium flowing through battery circuit 170 exchanges heat with the medium circulating through refrigeration cycle 150.

Battery circuit 170 includes, for example, a water pump 171, an electric heater 172, a battery 173, a bypass path 174, and a battery temperature sensor 175. Battery 173 is an example of the "power storage device" in the present disclosure. Further, battery temperature sensor 175 is an example of the "first temperature sensor" in the present disclosure. Battery circuit 170 (battery 173) may be provided with a ripple temperature rising circuit for raising the temperature of battery 173 by a ripple component of the current flowing through battery 173.

Each of five-way valves 180 and 190 is connected to low-temperature circuit 130 and battery circuit 170. The configuration of thermal management circuit 100 will be described later in detail with reference to Fig. 3.

ECU 500 controls thermal management circuit 100. ECU 500 includes a processor 501, a memory 502, a storage 503, and an interface 504.

Processor 501 is, for example, a central processing unit (CPU) or a micro-processing unit (MPU). Memory 502 is, for example, a random access memory (RAM). Storage 503 is a rewritable nonvolatile memory such as a hard disk drive (HDD), a solid state drive (SSD), and a flash memory. Storage 503 stores a system program including an operating system (OS) and a control program including computer-readable codes necessary for a control operation. Processor 501 reads the system program and the control program, loads these programs onto memory 502, and executes these programs to thereby implement various processes. Interface 504 controls communication between ECU 500 and components constituting thermal management circuit 100.

ECU 500 generates a control command based on the sensor values acquired from various sensors (for example, battery temperature sensor 175 and heat medium temperature sensor 137) included in thermal management circuit 100, the user operation received by HMI 600, and the like. Then, ECU 500 outputs the generated control command to thermal management circuit 100. ECU 500 may be divided into a plurality of ECUs for each function. Fig. 2 shows an example in which ECU 500 includes one processor 501, but ECU 500 may include a plurality of processors. The same also applies to memory 502 and storage 503.

In the present specification, the "processor" is not limited to a processor in a narrow sense that performs processing in a stored-program scheme, and may include a hardwired circuit such as an application specific integrated circuit (ASIC) and a field-programmable gate array (FPGA). Thus, the term "processor" can also be interchangeably read as processing circuitry for which processing is defined in advance by computer readable codes and/or a hardwired circuit.

HMI 600 is a display equipped with a touch panel, an operation panel, a console, or the like. HMI 600 receives a user operation for controlling thermal management system 1. HMI 600 outputs a signal indicating the user operation to ECU 500.

Outside air temperature sensor 700 detects an outside air temperature on the outside of electrically powered vehicle 1a. The information about the outside air temperature detected by outside air temperature sensor 700 is transmitted to ECU 500.

### <Configuration of Thermal Management Circuit>

Fig. 3 is a diagram showing an example of a configuration of thermal management circuit 100 according to the first embodiment. The heat medium (usually hot water) circulating through high-temperature circuit 110 flows through one or both of a first path and a second path. The first path passes through water pump 111, condenser 140, electric heater 112, three-way valve 113, heater core 114, reservoir tank 115, and water pump 111. The second path passes through water pump 111, condenser 140, electric heater 112, three-way valve 113, high-temperature radiator 121, reservoir tank 115, and water pump 111.

The heat medium (a cooling liquid) circulating through low-temperature circuit 130 flows through a path passing through water pump 131, SPU 132, PCU 133, oil cooler 134, step-up/step-down converter 135, five-way valve 180, low-temperature radiator 122, five-way valve 190, reservoir tank 136, and water pump 131.

Water pump 131 causes the heat medium to circulate through low-temperature circuit 130 according to the control command from ECU 500. SPU 132 controls charging and discharging of battery 173 according to the control command from ECU 500. According to the control command from ECU 500, PCU 133 converts direct-current (DC) power supplied from battery 173 into alternating-current (AC) power, and supplies the converted AC power to a motor (not shown) incorporated in a transaxle. Oil cooler 134 causes the lubricating oil for the motor to circulate with use of an electrical oil pump (EOP) (not shown). Oil cooler 134 cools the transaxle by heat exchange between the heat medium circulating through low-temperature circuit 130 and the lubricating oil for the motor. The frequency of the AC current flowing from an inverter (not shown) of PCU 133 to the motor may be set at the resonance frequency of the circuit including the inverter and the motor.

SPU 132, PCU 133, oil cooler 134, and step-up/step-down converter 135 are cooled by the heat medium circulating through low-temperature circuit 130. Reservoir tank 136 stores a part of the heat medium in low-temperature circuit 130 to thereby maintain the pressure and the amount of the heat medium in low-temperature circuit 130. Each of five-way valves 180 and 190 switches the path of the heat medium in low-temperature circuit 130 and battery circuit 170 according to the control command from ECU 500. Low-temperature radiator 122 is disposed in the vicinity of high-temperature radiator 121 and exchanges heat with high-temperature radiator 121. In place of oil cooler 134, the above-mentioned transaxle may be provided in low-temperature circuit 130.

Heat medium temperature sensor 137 detects the temperature of the heat medium in a flow path (a flow path 130b, which will be described later) in which PCU 133 and the like are provided. For example, heat medium temperature sensor 137 detects the temperature of the heat medium flowing between step-up/step-down converter 135 and five-way valve 180 (on the downstream side of step-up/step-down converter 135). Heat medium temperature sensor 137 may detect the temperature of the heat medium, for example, between PCU 133 and oil cooler 134.

The heat medium (gas-phase refrigerant or liquid-phase refrigerant) circulating through refrigeration cycle 150 flows through one or both of a first path and a second path. The first path passes through compressor 151, condenser 140, expansion valve 152, evaporator 153, EPR 154, and compressor 151. The second path passes through compressor 151, condenser 140, expansion valve 155, chiller 160, and compressor 151.

The heat medium (a cooling liquid) circulating through battery circuit 170 flows through one or both of a first path and a second path. The first path passes through water pump 171, chiller 160, five-way valve 180, electric heater 172, battery 173, five-way valve 190, and water pump 171. The second path passes through water pump 171, chiller 160, five-way valve 180, bypass path 174, five-way valve 190, and water pump 171.

Water pump 171 causes the heat medium to circulate through battery circuit 170 according to the control command from ECU 500. Chiller 160 cools the heat medium circulating through battery circuit 170 by heat exchange between the heat medium circulating through refrigeration cycle 150 and the heat medium circulating through battery circuit 170. Electric heater 172 heats the heat medium according to the control command from ECU 500. Battery 173 supplies electric power for traveling to a motor incorporated in the transaxle. Battery 173 may be heated by electric heater 172 or cooled by chiller 160. Bypass path 174 is provided such that the heat medium bypasses electric heater 172 and battery 173. When the heat medium flows through bypass path 174, it is possible to suppress a temperature change in the heat medium resulting from heat absorption/heat dissipation between the heat medium and battery 173. Battery temperature sensor 175 detects the temperature of battery 173.

Five-way valve 180 is provided with five ports P1 to P5. Port P1 is an inlet port into which the heat medium flows from chiller 160. Port P2 is an outlet port from which the heat medium flows out toward electric heater 172 and battery 173 of battery circuit 170. Port P3 is an inlet port into which the heat medium flows from SPU 132, PCU 133, oil cooler 134, and step-up/step-down converter 135 of low-temperature circuit 130. Port P4 is an outlet port from which the heat medium flows out toward bypass path 174 of battery circuit 170. Port P5 is an outlet port from which the heat medium flows out toward low-temperature radiator 122.

Five-way valve 190 is provided with five ports P11 to P15. Port P11 is an outlet port from which the heat medium flows out toward chiller 160. Port P12 is an inlet port into which the heat medium flows from electric heater 172 and battery 173 of battery circuit 170. Port P13 is an outlet port from which the heat medium flows out toward SPU 132, PCU 133, oil cooler 134, and step-up/step-down converter 135 of low-temperature circuit 130. Port P14 is an inlet port into which the heat medium flows from bypass path 174 of battery circuit 170. Port P15 is an inlet port into which the heat medium flows from low-temperature radiator 122.

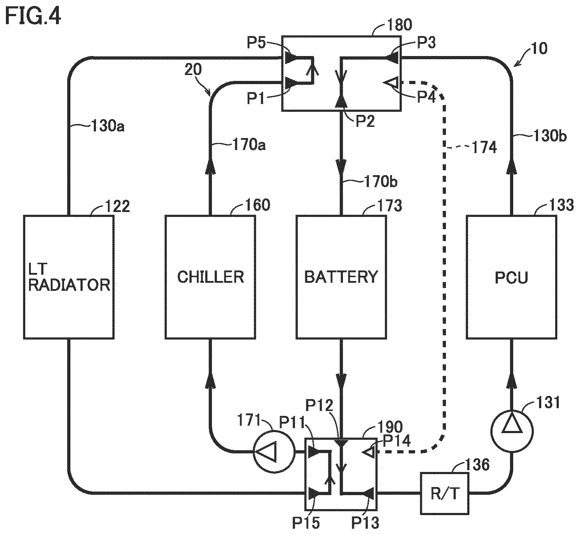

As shown in Fig. 4, battery 173 is provided in a flow path 170b of battery circuit 170. Battery 173 exchanges heat with the heat medium in flow path 170b. Flow path 170b is in thermal contact with battery 173. Flow path 170b serves to connect port P2 of five-way valve 180 to port P12 of five-way valve 190. Flow path 170b is an example of the "first flow path" in the present disclosure.

Low-temperature radiator 122 is provided in a flow path 130a of low-temperature circuit 130. Flow path 130a serves to connect port P5 of five-way valve 180 to port P15 of five-way valve 190. Flow path 130a is an example of the "third flow path" in the present disclosure.

Each of water pump 131, SPU 132, PCU 133, oil cooler 134, step-up/step-down converter 135, reservoir tank 136, and heat medium temperature sensor 137 is provided in flow path 130b of low-temperature circuit 130. PCU 133, oil cooler 134, and the like exchange heat with the heat medium in flow path 130b. Flow path 130b is in thermal contact with SPU 132, PCU 133, oil cooler 134, and step-up/step-down converter 135. Flow path 130b serves to connect port P3 of five-way valve 180 to port P13 of five-way valve 190. Flow path 130b is an example of the "second flow path" in the present disclosure.

Chiller 160 is provided in a flow path 170a of battery circuit 170. Flow path 170a serves to connect port P1 of five-way valve 180 to port P11 of five-way valve 190. Flow path 170a is an example of the "fourth flow path" in the present disclosure.

### <Communication Pattern>

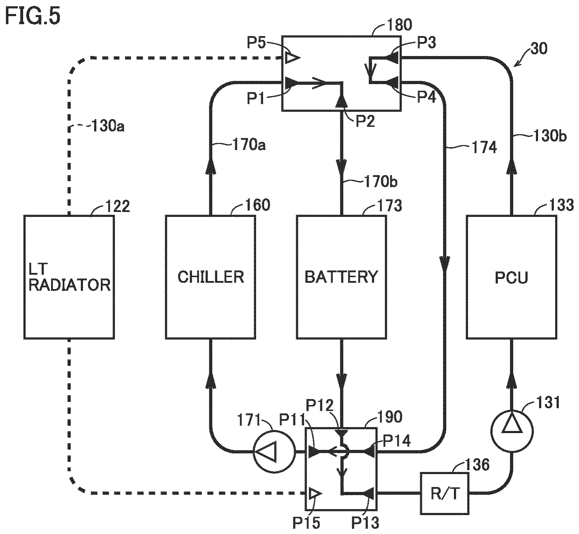

Figs. 4 and 5 are conceptual diagrams showing outlines of a first communication pattern and a second communication pattern, respectively, of thermal management circuit 100 that are formed by controlling five-way valves 180 and 190. The second communication pattern is an example of the "temperature rising circuit" in the present disclosure.

In the first communication pattern, five-way valve 180 serves to form: a path through which ports P1 and P5 communicate with each other; and a path through which ports P2 and P3 communicate with each other.

Further, in the first communication pattern, five-way valve 190 serves to form: a path through which ports P11 and P15 communicate with each other; and a path through which ports P12 and P13 communicate with each other.

As a result, a first closed circuit 10 is formed in which flow path 170b of battery circuit 170 and flow path 130b of low-temperature circuit 130 are connected to each other. Further, a second closed circuit 20 is formed in which flow path 170a of battery circuit 170 and flow path 130a of low-temperature circuit 130 are connected to each other. Thereby, first closed circuit 10 and second closed circuit 20 are separated and independent from each other. First closed circuit 10 and second closed circuit 20 are examples of the "second connection flow path" and the "third connection flow path", respectively, in the present disclosure.

In this case, since the electrically powered vehicle may not be equipped with an engine, the heating target of the electrically powered vehicle may not be able to be heated with use of the waste heat of the engine. Thus, it may be important to effectively utilize the heat from the drive device including the inverter and the motor. Further, it is desired to efficiently raise the temperature of the power storage device. In other words, it is desired to efficiently raise the temperature of the power storage device while allowing effective use of the heat generated from the drive device.

Thus, in the first embodiment, the second communication pattern shown in Fig. 5 is formed during the temperature rise control for battery 173. In the second communication pattern, five-way valve 180 serves to form: a path through which ports P1 and P2 communicate with each other; and a path through which ports P3 and P4 communicate with each other. Further, in the second communication pattern, five-way valve 190 serves to form: a path through which ports P11 and P14 communicate with each other; and a path through which ports P12 and P13 communicate with each other.

As a result, a third closed circuit 30 is formed in which flow path 170b of battery circuit 170, flow path 130b of low-temperature circuit 130, and flow path 170a of battery circuit 170 are connected. In this case, low-temperature radiator 122 (flow path 130a) is not connected to but separated from third closed circuit 30 (battery 173, chiller 160, and PCU 133). Third closed circuit 30 is an example of the "first connection flow path" in the present disclosure.

When battery 173 is used in the second communication pattern shown in Fig. 5, the heat resulting from self-heating of battery 173 is accumulated (stored) in third closed circuit 30. Further, during self-heating of battery 173, PCU 133 and the transaxle (not shown) also generate heat. The heat generated in PCU 133 and the transaxle is accumulated (stored) in third closed circuit 30. Thus, battery 173 is raised in temperature by the heat resulting from self-heating and the heat generated in PCU 133 and the transaxle.

As a result, battery 173 can be efficiently raised in temperature while allowing effective use of the heat generated from the drive device such as PCU 133. When there is no request for heating during the temperature rise control for battery 173, ECU 500 may stop heat exchange (heat dissipation) in chiller 160 by stopping compressor 151, electric heater 112 (both of which are shown in Fig. 3), and the like.

### <Method of Controlling Thermal Management Circuit>

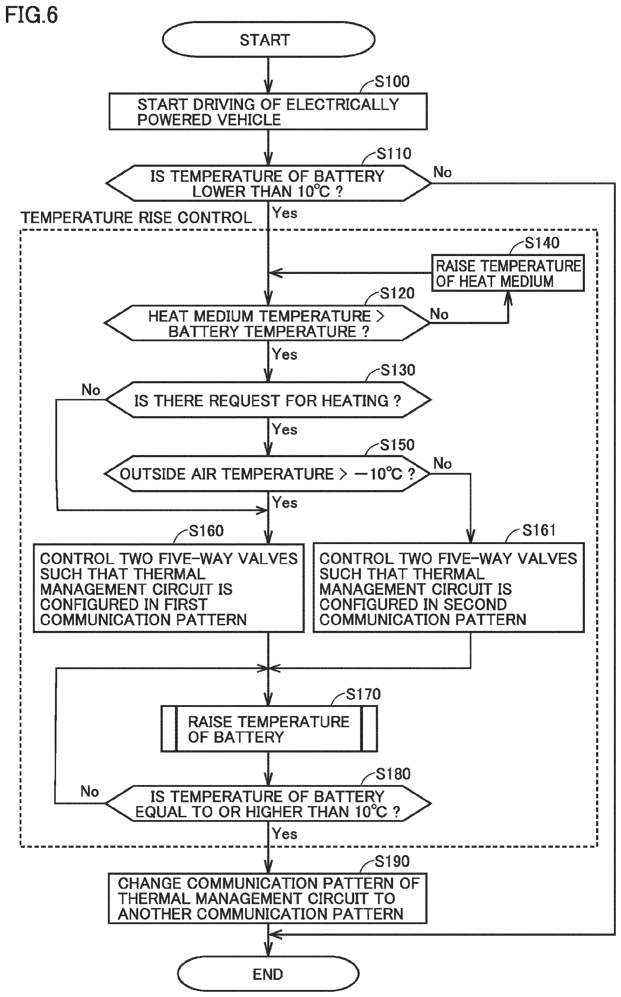

A method of controlling thermal management system 1 will be hereinafter described with reference to the flowchart in Fig. 6. The flow shown in Fig. 5 is merely an example, and the control in the present disclosure is not limited to the example shown in Fig. 5.

In step S100, driving of electrically powered vehicle 1a is started (a traveling system is activated). Specifically, a start button (not shown) of electrically powered vehicle 1a is pressed, PCU 133 and the like are driven, and PCU 133 and battery 173 are electrically connected (by an SMR that is not shown). Thereby, a current is supplied from PCU 133 to battery 173. When ECU 500 receives a prescribed internal signal in electrically powered vehicle 1a, it detects that driving of electrically powered vehicle 1a has been started. At this time, flow path 170b of battery circuit 170 and flow path 130b of low-temperature circuit 130 are not connected to but separated from each other.

In step S110, ECU 500 determines whether or not the temperature of battery 173 detected by battery temperature sensor 175 is lower than 10°C. When the temperature of battery 173 is lower than 10°C (YES in S110), the process proceeds to step S120. When the temperature of battery 173 is equal to or higher than 10°C (NO in S110), the process ends. Note that the threshold value in step S110 may be a numerical value other than 10°C.

In step S120, ECU 500 determines whether or not the temperature of the heat medium detected by heat medium temperature sensor 137 is higher than the temperature of battery 173 detected by battery temperature sensor 175. When the temperature of the heat medium is higher than the temperature of battery 173 (YES in S120), the process proceeds to step S130. When the temperature of the heat medium is equal to or lower than the temperature of battery 173 (NO in S120), the process proceeds to step S140.

In step S130, ECU 500 determines whether or not there is a request from the user of electrically powered vehicle 1a to activate heating. When there is the request (YES in S130), the process proceeds to step S150. When there is no request (NO in S130), the process proceeds to step S160. Based on the signal transmitted to ECU 500 when the user presses a button for activating heating, ECU 500 may determine that there is the request.

In step S140, ECU 500 performs control to raise the temperature of the heat medium flowing through flow path 130b. Specifically, ECU 500 causes the heat medium to circulate for a prescribed time period in the state in which PCU 133 and the like are driven. Thereby, the heat generated from PCU 133 and the like raises the temperature of the heat medium. Then, the process returns to step S120.

In step S150, ECU 500 determines whether or not the outside air temperature detected by outside air temperature sensor 700 is higher than -10°C. When the outside air temperature is higher than -10°C (YES in S150), the process proceeds to step S160. When the outside air temperature is equal to or lower than -10°C (NO in S150), the process proceeds to step S161. The threshold value of -10°C as mentioned above is set based on the state in which the heat medium is expanded by expansion valve 155 and thereby cooled to about -10°C. Further, -10°C is an example of the "prescribed threshold value" in the present disclosure.

In step S160, ECU 500 controls each of five-way valves 180 and 190 such that thermal management circuit 100 is configured in the first communication pattern shown in Fig. 4. At this time, when there is a request for heating in step S130 (YES in S130), water pump 171 may be driven.

In step S161, ECU 500 controls each of five-way valves 180 and 190 such that thermal management circuit 100 is configured in the second communication pattern shown in Fig. 5. At this time, even when there is a request for heating in step S130 (YES in S130), but if the flow rate of the heat medium (the output of water pump 131) is sufficient, water pump 171 may be kept stopped.

In step S170, ECU 500 raises the temperature of battery 173 by keeping the state in which the first communication pattern or the second communication pattern is formed. A detailed process executed in step S170 will be described later.

In step S180, ECU 500 determines whether or not the temperature of battery 173 detected by battery temperature sensor 175 is equal to or higher than 10°C. When the temperature of battery 173 is equal to or higher than 10°C (YES in S180), the process proceeds to step S190. When the temperature of battery 173 is lower than 10°C (NO in S180), the process returns to step S170. The threshold value in step S180 may be a numerical value other than 10°C as long as it is equal to or larger than the threshold value in step S110.

In step S190, ECU 500 controls each of five-way valves 180 and 190 to change the communication pattern of thermal management circuit 100 from the first communication pattern shown in Fig. 4 (or the second communication pattern shown in Fig. 5) to another communication pattern (for example, a communication pattern suitable for traveling of electrically powered vehicle 1a). Then, the process ends.

### <Process in S170>

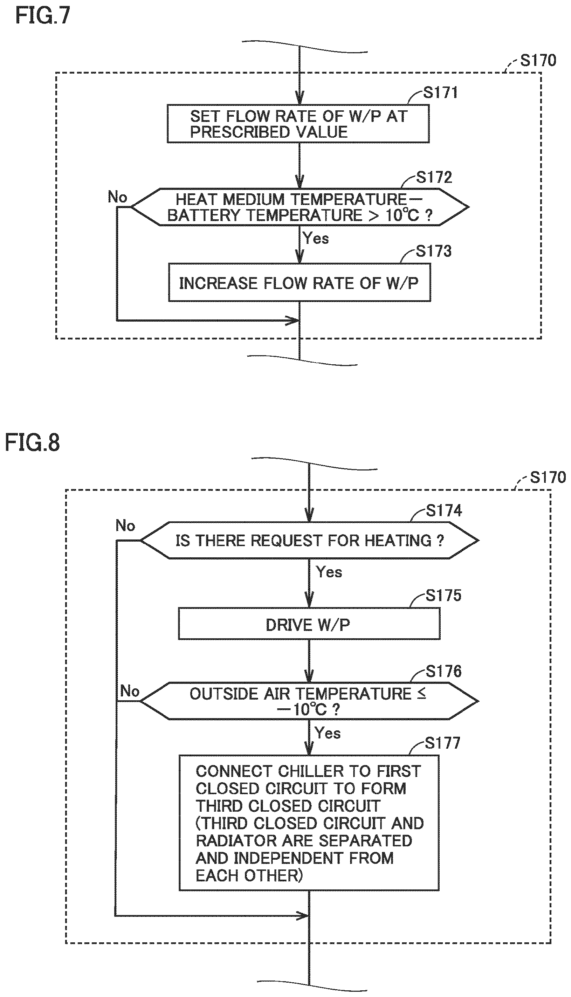

As shown in Fig. 7, the process in step S170 includes processes in steps S171 to S173. In step S171, ECU 500 sets (initializes) the flow rate (the output) of water pump 131 at a prescribed value. This prescribed value is a relatively low value (for example, about one-fourth of the upper limit value) within the range of the flow rate that can be output by water pump 131. Note that the process in step S171 is performed only in the first flow.

In step S172, ECU 500 determines whether or not the difference between the temperature of the heat medium detected by heat medium temperature sensor 137 and the temperature of battery 173 detected by battery temperature sensor 175 is larger than 10°C (temperature of heat medium - temperature of battery 173 > 10°C). When the above-mentioned difference is larger than 10°C (YES in S172), the process proceeds to step S173. When the above-mentioned difference is equal to or smaller than 10°C (NO in S172), the process proceeds to step S180 (see Fig. 6). The temperature of the heat medium rises more quickly than the temperature of battery 173 does. Thereby, the difference gradually increases with time during the temperature rise control for battery 173.

In step S173, ECU 500 increases the flow rate (the output) of water pump 131. For example, ECU 500 sets the flow rate (the output) of water pump 131 at an upper limit value within the range of the flow rate that can be output by water pump 131. Thus, the flow rate (the output) of water pump 131 is increased as the above-mentioned difference (the difference between the temperature of the heat medium and the temperature of battery 173) increases with time during the temperature rise control for battery 173. Then, the process proceeds to step S180 (see Fig. 6). In the case where the flow rate (the output) of water pump 131 has already been set at the above-mentioned upper limit value in step S173, the flow rate (the output) of water pump 131 is not changed.

In the example described above, the process in step S173 is performed based on the difference between the temperature of the heat medium and the temperature of battery 173, but the present disclosure is not limited thereto. For example, the process in step S173 may be performed based on the state in which a prescribed time period (for example, 10 minutes) has elapsed after the process in step S171 was performed. In other words, the difference is not taken into consideration in this case.

In the example described in step S173, the flow rate (the output) of water pump 131 is increased to a prescribed value based on the above-mentioned difference, but the present disclosure is not limited thereto. For example, ECU 500 may determine the flow rate (the output) of water pump 131 based on the temperature of the heat medium detected by heat medium temperature sensor 137 and the required value of the flow rate of the heat medium. ECU 500 may set the flow rate (output) using a map indicating the relation between: the flow rate (the output) of water pump 131; and the temperature of the heat medium and the required value for the flow rate of the heat medium. The above-mentioned map is stored, for example, in memory 502 (see Fig. 2).

As shown in Fig. 8, the process in step S170 includes processes in steps S174 to S177. In step S174, ECU 500 determines whether or not there is a request from the user to activate heating. When there is the request (YES in S174), the process proceeds to step S175. When there is no request (NO in S174), the process proceeds to step S180 (see Fig. 6).

In step S175, ECU 500 drives water pump 171. Thereby, the heat medium circulates through second closed circuit 20 (see Fig. 8(B)). When water pump 171 has already been driven, water pump 171 is continuously driven.

In step S176, ECU 500 determines whether or not the value detected by outside air temperature sensor 700 becomes equal to or lower than -10°C. When the outside air temperature becomes equal to or lower than -10°C (YES in S176), the process proceeds to step S177. When the outside air temperature is higher than -10°C (NO in S176), the process proceeds to step S180 (see Fig. 6).

In step S177, ECU 500 controls five-way valves 180 and 190 such that flow paths 130a and 170a are disconnected from each other and third closed circuit 30 (see Fig. 5) connecting first closed circuit 10 and flow path 170a is formed. Thereby, chiller 160, battery 173, and PCU 133 are connected to each other. Further, low-temperature radiator 122 is separated and independent from third closed circuit 30 (chiller 160, battery 173, and PCU 133). When thermal management circuit 100 has already been configured in the second communication pattern (i.e., when the process has passed through S161), ECU 500 maintains thermal management circuit 100 in the second communication pattern.

Note that only one of a series of processes in steps S174 and S175 and a series of processes in steps S176 and S177 may be performed.

As described above, in the first embodiment, during the temperature rise control for battery 173, ECU 500 forms third closed circuit 30 in which flow paths 170a, 170b, and 130a are connected, and separates low-temperature radiator 122 (flow path 130a) from third closed circuit 30 to be independent therefrom. Thereby, battery 173 can be raised in temperature by the heat resulting from self-heating of battery 173 and the heat generated by PCU 133 and the like. As a result, battery 173 can be efficiently raised in temperature while allowing effective use of the heat generated from PCU 133 and the like.

### [Second Embodiment]

In the configuration described in the above first embodiment, five-way valves 180 and 190 are employed. However, the configuration of the switching device according to the present disclosure is not limited thereto. The second embodiment will be hereinafter described with regard to a configuration in which the switching device according to the present disclosure is an eight-way valve 280.

### <Overall Configuration>

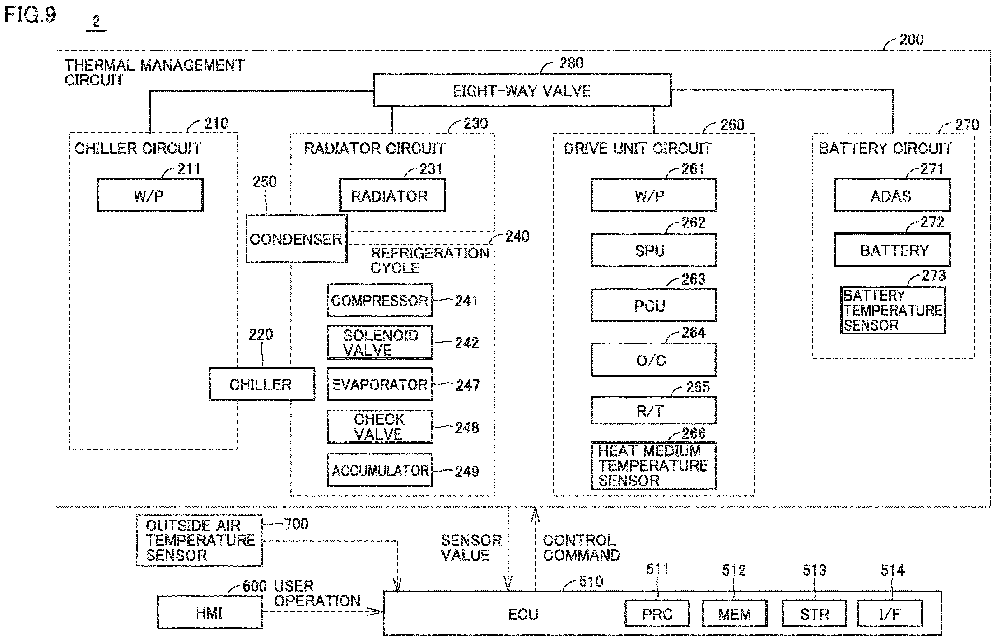

Fig. 9 is a diagram showing an example of an overall configuration of a thermal management system 2 according to the second embodiment in the present disclosure. Thermal management system 2 is different from thermal management system 1 (see Fig. 1) according to the first embodiment in that it includes a thermal management circuit 200 in place of thermal management circuit 100 and an ECU 510 in place of ECU 500.

Thermal management circuit 200 includes, for example, a chiller circuit 210, a chiller 220, a radiator circuit 230, a refrigeration cycle 240, a condenser 250, a drive unit circuit 260, a battery circuit 270, and an eight-way valve 280. Eight-way valve 280 is an example of the "switching device" in the present disclosure. Chiller 220 and refrigeration cycle 240 are examples of the "chiller device" and the "air conditioning circuit", respectively, in the present disclosure.

Chiller circuit 210 includes a water pump (W/P) 211. Chiller 220 is connected to (shared among) both chiller circuit 210 and refrigeration cycle 240.

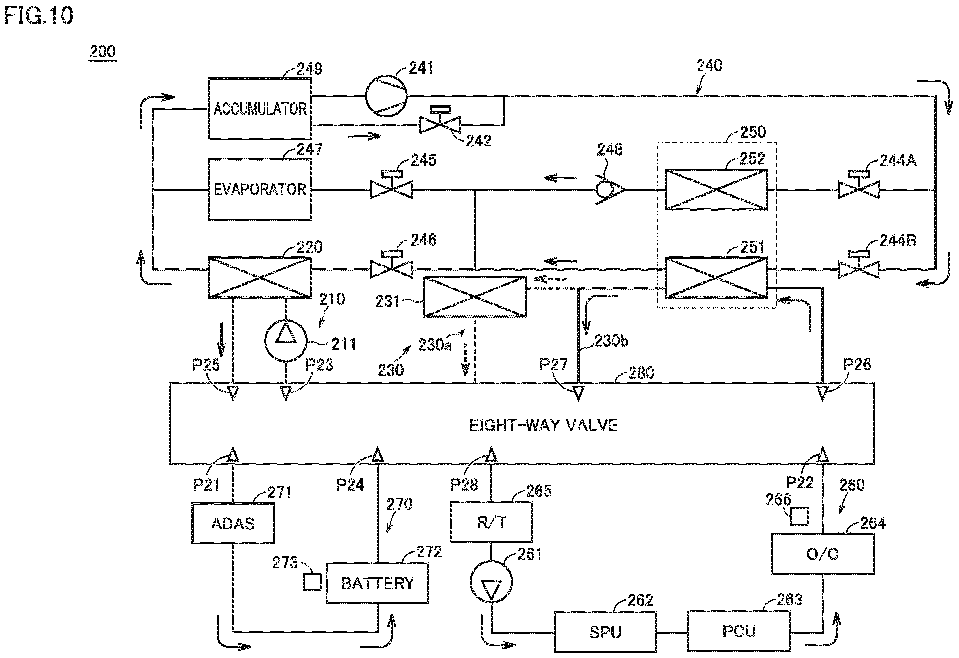

Radiator circuit 230 includes a radiator 231. Refrigeration cycle 240 includes, for example, a compressor 241, a solenoid valve 242, solenoid valves 244A, 244B, 245, and 246 (see Fig. 10), an evaporator 247, a check valve 248, and an accumulator 249. Condenser 250 includes a water-cooled condenser 251 and an air-cooled condenser 252 (see Fig. 10), and water-cooled condenser 251 is connected to both refrigeration cycle 240 and radiator circuit 230.

Drive unit circuit 260 includes, for example, a water pump 261, an SPU 262, a PCU 263, an oil cooler 264, a reservoir tank 265, and a heat medium temperature sensor 266. In place of oil cooler 264, a transaxle may be provided in drive unit circuit 260. Further, PCU 263 and oil cooler 264 (or the transaxle) may be collectively installed as an eAxle. PCU 263 and oil cooler 264 are an example of the "drive device" in the present disclosure. Heat medium temperature sensor 266 and water pump 261 are examples of the "second temperature sensor" and the "pump", respectively, in the present disclosure.

Battery circuit 270 includes, for example, an advanced driver-assistance systems (ADAS) 271, a battery 272, and a battery temperature sensor 273. Battery 272 is an example of the "power storage device" in the present disclosure. Battery temperature sensor 273 is an example of the "first temperature sensor".

Eight-way valve 280 includes eight ports P21 to P28 (see Fig. 10) and is connected to chiller circuit 210, radiator circuit 230, drive unit circuit 260, and battery circuit 270.

ECU 510 controls thermal management circuit 200. ECU 510 includes a processor 511, a memory 512, a storage 513, and an interface 514.

### <Configuration of Thermal Management Circuit>

Fig. 10 is a diagram showing an example of a configuration of thermal management circuit 200 according to the second embodiment. The heat medium circulating through chiller circuit 210 flows through a path passing through eight-way valve 280 (port P23), water pump 211, chiller 220, and eight-way valve 280 (port P25).

Water pump 211 causes the heat medium to circulate through chiller circuit 210 according to a control command from ECU 510. Chiller 220 exchanges heat between the heat medium circulating through chiller circuit 210 and the heat medium circulating through refrigeration cycle 240. According to the control command from ECU 510, eight-way valve 280 switches the path to which chiller circuit 210 is to be connected. Switching of the path by eight-way valve 280 will be described later in detail.

In the example shown in Fig. 10, the heat medium circulating through radiator circuit 230 flows through eight-way valve 280 (port P26), water-cooled condenser 251, a bypass flow path 230b, and eight-way valve 280 (port P27). Radiator 231 is disposed downstream of a grille shutter (not shown), and exchanges heat between the outside air of the vehicle and the heat medium.

The heat medium (gas-phase refrigerant or liquid-phase refrigerant) circulating through refrigeration cycle 240 flows through one of a first path, a second path, a third path, and a fourth path. The first path passes through compressor 241, solenoid valve 244A, air-cooled condenser 252, check valve 248, solenoid valve (expansion valve) 245, evaporator 247, accumulator 249, and compressor 241. The second path passes through compressor 241, solenoid valve 244A, air-cooled condenser 252, check valve 248, solenoid valve (expansion valve) 246, chiller 220, accumulator 249, and compressor 241. The third path passes through compressor 241, solenoid valve 244B, water-cooled condenser 251, solenoid valve (expansion valve) 245, evaporator 247, accumulator 249, and compressor 241. The fourth path passes through compressor 241, solenoid valve 244B, water-cooled condenser 251, solenoid valve 246, chiller 220, accumulator 249, and compressor 241.

Compressor 241 compresses the gas-phase refrigerant circulating through refrigeration cycle 240 according to the control command from ECU 510. Solenoid valve 242 is connected in parallel to compressor 241, and adjusts the amount of the gas-phase refrigerant flowing into compressor 241 according to the control command from ECU 510. According to the control command from ECU 510, solenoid valve 244 (244A, 244B) switches whether to cause the gas-phase refrigerant discharged from compressor 241 to flow into water-cooled condenser 251 or air-cooled condenser 252. Water-cooled condenser 251 exchanges heat between the gas-phase refrigerant discharged from compressor 241 and the heat medium flowing through radiator circuit 230. Air-cooled condenser 252 exchanges heat with the air introduced into a vehicle compartment to generate warm air. According to the control command from ECU 510, solenoid valve 245 restricts the inflow of the liquid-phase refrigerant into evaporator 247. According to the control command from ECU 510, solenoid valve 246 restricts the inflow of the liquid-phase refrigerant into chiller 220. Solenoid valves 245 and 246 each also have a function of expanding the liquid-phase refrigerant. Accumulator 249 serves to remove the liquid-phase refrigerant from the refrigerant in the gas-liquid mixed state, and prevents the liquid-phase refrigerant from being suctioned into compressor 241 when the refrigerant is not completely vaporized by evaporator 247.

The heat medium (a cooling liquid) circulating through drive unit circuit 260 flows through a path passing through eight-way valve 280 (port P28), reservoir tank 265, water pump 261, SPU 262, PCU 263, oil cooler 264, and eight-way valve 280 (port P22).

According to the control command from ECU 510, water pump 261 causes the heat medium to circulate through drive unit circuit 260. SPU 262 controls charging and discharging of battery 272 according to the control command from ECU 510. According to the control command from ECU 500, PCU 263 converts DC power supplied from battery 272 into AC power, and supplies the converted AC power to a motor (not shown) incorporated in the transaxle. Oil cooler 264 cools the transaxle by heat exchange between the heat medium circulating through drive unit circuit 260 and the lubricating oil in the motor. Note that heat exchange may be performed between the heat generated by supplying electric power to a stator without rotating the rotor of the motor and the heat medium circulating through drive unit circuit 260.

SPU 262, PCU 263, and oil cooler 264 are cooled by the heat medium circulating through drive unit circuit 260. Reservoir tank 265 stores a part of the heat medium inside drive unit circuit 260 (the heat medium that has overflowed as the pressure rises) to maintain the pressure and the amount of the heat medium inside drive unit circuit 260.

Heat medium temperature sensor 266 detects the temperature of the heat medium in a flow path (a flow path 260a described later) in which PCU 263 and the like are provided. For example, heat medium temperature sensor 266 detects the temperature of the heat medium flowing between oil cooler 264 and eight-way valve 280 (on the downstream side of oil cooler 264). Heat medium temperature sensor 266 may detect the temperature of the heat medium, for example, between PCU 263 and oil cooler 264.

The heat medium (a cooling liquid) circulating through battery circuit 270 flows through a path passing through eight-way valve 280 (port P21), ADAS 271, battery 272, and eight-way valve 280 (port P24).

ADAS 271 includes, for example, an adaptive cruise control (ACC), an auto speed limiter (ASL), a lane keeping assist (LKA), a pre-crash safety (PCS), and a lane departure alert (LDA). Battery circuit 270 may include an autonomous driving system (ADS) in addition to ADAS 271. Battery 272 supplies electric power for traveling to the motor incorporated in the transaxle. Battery temperature sensor 273 detects the temperature of battery 272.

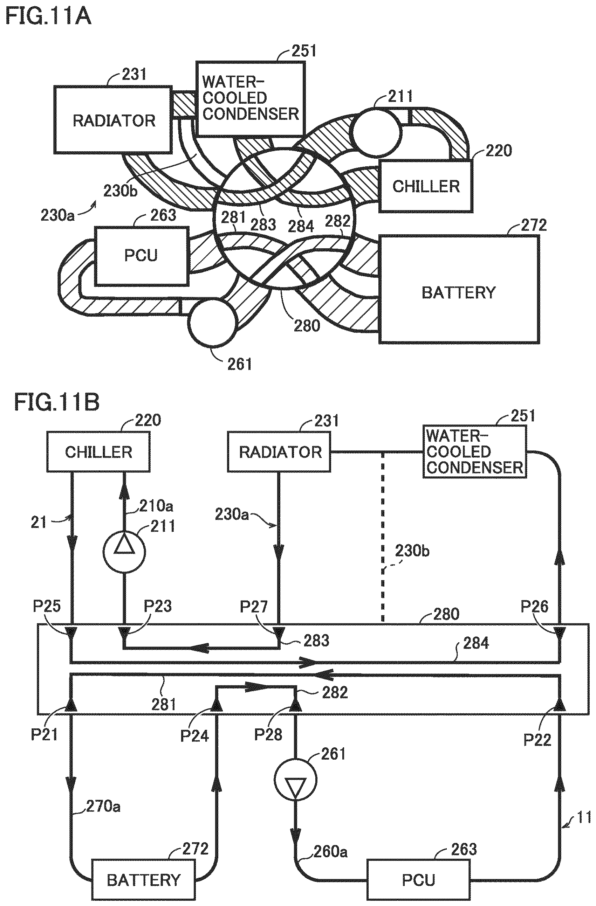

As shown in Figs. 11A and 11B, chiller 220 is provided in a flow path 210a (see Fig. 11B) of chiller circuit 210. Flow path 210a serves to connect ports P23 and P25 of eight-way valve 280. Flow path 210a is an example of the "fourth flow path" in the present disclosure.

Radiator 231 is provided in a flow path 230a (see Fig. 11B) of radiator circuit 230. Flow path 230a includes bypass path 230b. Bypass flow path 230b is provided to connect eight-way valve 280 to a portion between water-cooled condenser 251 and radiator 231. When the heat medium flows through bypass flow path 230b, the heat medium does not flow through radiator 231. When the heat medium flows through radiator 231, the heat medium does not flow through bypass flow path 230b. Flow path 230a is an example of the "third flow path" in the present disclosure.

Water pump 261, SPU 262, PCU 263, oil cooler 264, and reservoir tank 265 (only PCU 263 is representatively shown in Figs. 11A and 11B) are provided in a flow path 260a (see Fig. 11B) of drive unit circuit 260. Flow path 260a serves to connect ports P28 and P22 of eight-way valve 280. Flow path 260a is an example of the "second flow path" in the present disclosure.

Battery 272 is provided in a flow path 270a (see Fig. 11B) of battery circuit 270. Flow path 270a serves to connect ports P21 and P24 of eight-way valve 280. Flow path 270a is an example of the "first flow path" in the present disclosure.

### <Communication Pattern>

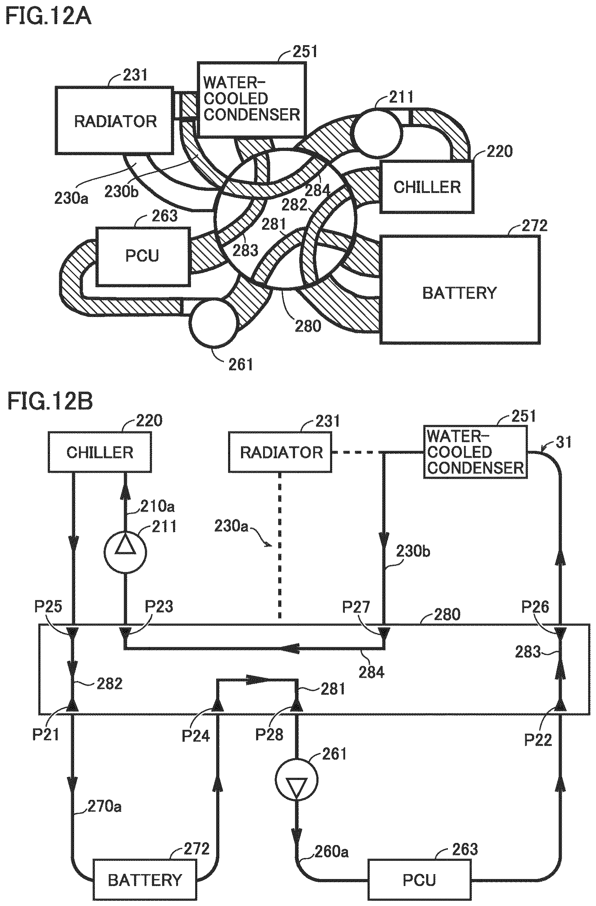

Fig. 11A (Fig. 11B) and Fig. 12A (Fig. 12B) are conceptual diagrams showing outlines of the first communication pattern and the second communication pattern, respectively, by eight-way valve 280. The second communication pattern is an example of the "temperature rising circuit" in the present disclosure.

In the first communication pattern (see Figs. 11A and 11B), an internal flow path 281 of eight-way valve 280 forms a path through which ports P22 and P21 communicate with each other. Further, in the first communication pattern, an internal flow path 282 of eight-way valve 280 forms a path through which ports P24 and P28 communicate with each other. Further, in the first communication pattern, an internal flow path 283 of eight-way valve 280 forms a path through which ports P27 and P23 communicate with each other. In the first communication pattern, an internal flow path 284 of eight-way valve 280 forms a path through which ports P25 and P26 communicate with each other. Further, in the first communication pattern, radiator 231 and port P27 of eight-way valve 280 are connected by flow path 230a.

Thereby, flow path 260a in which PCU 263 and the like are provided is connected via eight-way valve 280 to flow path 270a in which battery 272 is provided. As a result, the heat medium flows through a first closed circuit 11 passing through water pump 261, PCU 263, eight-way valve 280, battery 272, eight-way valve 280, and water pump 261. First closed circuit 11 is an example of the "second connection flow path" in the present disclosure.

Further, flow path 210a in which chiller 220 is provided is connected via eight-way valve 280 to flow path 230a of radiator circuit 230. As a result, the heat medium flows through a second closed circuit 21 passing through water pump 211, chiller 220, eight-way valve 280, water-cooled condenser 251, radiator 231, eight-way valve 280, and water pump 211. Second closed circuit 21 is an example of the "third connection flow path" in the present disclosure.

In the example shown in Figs. 11A and 11B, first closed circuit 11 and second closed circuit 21 are separated and independent from each other.

In this case, as shown in Fig. 11A, eight-way valve 280 has a circular shape when viewed in the direction perpendicular to the paper surface. Eight-way valve 280 is configured to be rotatable clockwise or counterclockwise.

Fig. 12A shows the second communication pattern in the state in which eight-way valve 280 is rotated counterclockwise by a prescribed angle (for example, about 20 degrees) from the state in Fig. 11A. In this case, internal flow path 281 of eight-way valve 280 forms a path through which ports P24 and P28 communicate with each other. Further, internal flow path 282 of eight-way valve 280 forms a path through which ports P21 and P25 communicate with each other. Further, internal flow path 283 of eight-way valve 280 forms a path through which ports P22 and P26 communicate with each other. Further, internal flow path 284 of eight-way valve 280 forms a path through which ports P23 and P27 communicate with each other. In the second communication pattern, bypass flow path 230b and port P27 of eight-way valve 280 are connected by flow path 230a (bypass flow path 230b).

Thus, as shown in Fig. 12B, the heat medium flows through a third closed circuit 31 passing through water-cooled condenser 251, eight-way valve 280, water pump 211, chiller 220, eight-way valve 280, battery 272 and eight-way valve 280, water pump 261, PCU 263, eight-way valve 280, and water-cooled condenser 251. Radiator 231 is separated and independent from third closed circuit 31. Third closed circuit 31 is an example of the "first connection flow path" in the present disclosure.

Therefore, rotating eight-way valve 280 makes it possible to easily switch the communication pattern between the first communication pattern (see Figs. 11A and 11B) and the second communication pattern (see Figs. 12A and 12B).

### <Method of Controlling Thermal Management Circuit>

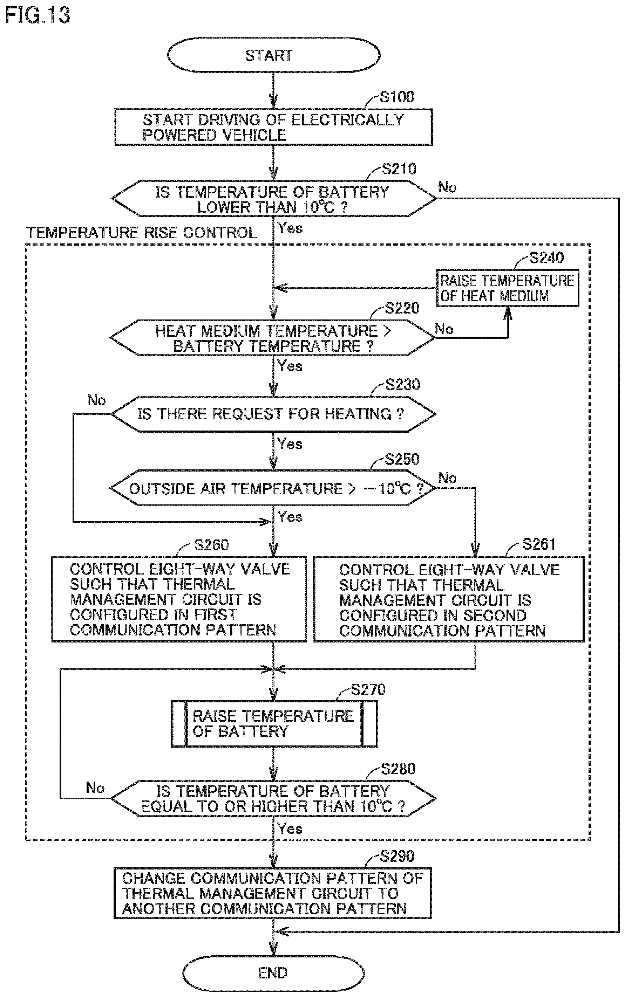

A method of controlling thermal management system 2 will be hereinafter described with reference to a flowchart in Fig. 13. Note that the flow shown in Fig. 13 is merely an example, and the control in the present disclosure is not limited to the example shown in Fig. 13. Further, the description of the same steps as those in the control flow in the above-described first embodiment will be simplified or omitted.

In step S210 subsequent to step S100, ECU 510 determines whether or not the temperature of battery 272 detected by battery temperature sensor 273 is lower than 10°C. When the temperature of battery 272 is lower than 10°C (YES in S210), the process proceeds to step S220. When the temperature of battery 272 is equal to or higher than 10°C (NO in S210), the process ends. The threshold value in step S210 may be a numerical value other than 10°C. At this time, flow path 270a of battery circuit 270 and flow path 260a of drive unit circuit 260 are not connected to but separated from each other.

In step S220, ECU 510 determines whether or not the temperature of the heat medium detected by heat medium temperature sensor 266 is higher than the temperature of battery 272 detected by battery temperature sensor 273. When the temperature of the heat medium is higher than the temperature of battery 272 (YES in S220), the process proceeds to step S230. When the temperature of the heat medium is equal to or lower than the temperature of battery 272 (NO in S220), the process proceeds to step S240.

In step S230, ECU 510 determines whether or not there is a request to activate heating from the user of electrically powered vehicle 1a. When there is the request (YES in S230), the process proceeds to step S250. When there is no request (NO in S230), the process proceeds to step S260.

In step S240, similarly to step S140 (see Fig. 6) in the first embodiment, ECU 510 performs control to raise the temperature of the heat medium flowing through flow path 260a. Then, the process returns to step S220.

In step S250, ECU 510 determines whether or not the outside air temperature detected by outside air temperature sensor 700 is higher than -10°C. When the outside air temperature is higher than -10°C (YES in S250), the process proceeds to step S260. When the outside air temperature is equal to or lower than -10°C (NO in S250), the process proceeds to step S261. The above-mentioned threshold value of -10°C is set based on the state in which the heat medium is expanded by solenoid valve 246 (an expansion valve) and thereby cooled to about -10°C. Further, -10°C is an example of the "prescribed threshold value" in the present disclosure.

In step S260, ECU 510 controls eight-way valve 280 such that thermal management circuit 200 is configured in the first communication pattern shown in Figs. 11A and 11B. At this time, when there is a request for heating in step S230 (YES in S230), water pump 211 may be driven.

In step S261, ECU 510 controls eight-way valve 280 such that thermal management circuit 200 is configured in the second communication pattern shown in Figs. 12A and 12B.

In step S270, ECU 510 raises the temperature of battery 272 by keeping the state in which the first communication pattern or the second communication pattern is formed. A detailed process executed in step S270 will be described later.

In step S280, ECU 510 determines whether or not the temperature of battery 272 detected by battery temperature sensor 273 is equal to or higher than 10°C. When the temperature of battery 272 is equal to or higher than 10°C (YES in S280), the process proceeds to step S290. When the temperature of battery 272 is lower than 10°C (NO in S280), the process returns to step S270. The threshold value in step S280 may be a numerical value other than 10°C as long as it is equal to or larger than the threshold value in step S210.

In step S290, ECU 510 controls eight-way valve 280 to change the communication pattern of thermal management circuit 200 from the first communication pattern shown in Figs. 11A and 11B (or the second communication pattern shown in Figs. 12A and 12B) to another communication pattern (for example, a communication pattern suitable for traveling of electrically powered vehicle 1a). The process then ends.

### <Process in S270>

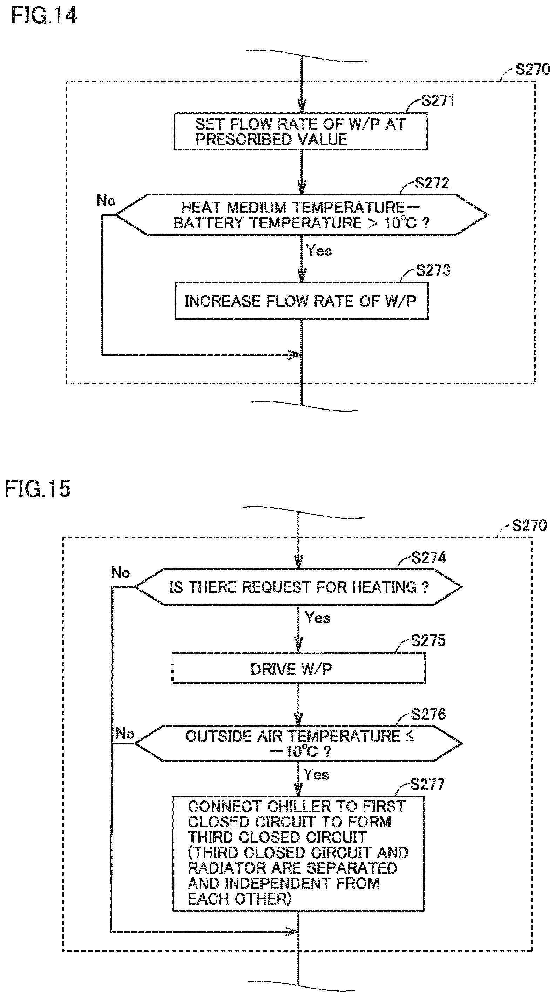

As shown in Fig. 14, the process in step S270 includes processes in steps S271 to S273. In step S271, ECU 510 sets (initializes) the flow rate (the output) of water pump 261 at a prescribed value. The prescribed value is a relatively low value (for example, about one-fourth of the upper limit value) within the range of the flow rate that can be output in water pump 261. The process in step S271 is performed only in the first flow.

In step S272, ECU 510 determines whether or not the difference between the temperature of the heat medium detected by heat medium temperature sensor 266 and the temperature of battery 272 detected by battery temperature sensor 273 is larger than 10°C (temperature of heat medium - temperature of battery 272 > 10°C). When the difference is larger than 10°C (YES in S272), the process proceeds to step S273. When the difference is equal to or smaller than 10°C (NO in S272), the process proceeds to step S280 (see Fig. 13).

In step S273, ECU 510 increases the flow rate (the output) of water pump 261. For example, ECU 510 sets the flow rate (the output) of water pump 261 at an upper limit value within the range of the flow rate that can be output in water pump 261. When the flow rate (the output) of water pump 261 has already been set at the upper limit value in step S273, the flow rate (the output) of water pump 261 is not changed.

As shown in Fig. 15, the process in step S270 includes processes in steps S274 to S277. In step S274, ECU 510 determines whether or not there is a request from the user to activate heating. When there is the request (YES in S274), the process proceeds to step S275. When there is no request (NO in S274), the process proceeds to step S280 (see Fig. 13).

In step S275, ECU 510 drives water pump 211. When water pump 211 has already been driven, water pump 211 is continuously driven.

In step S276, ECU 510 determines whether or not the value detected by outside air temperature sensor 700 has become equal to or smaller than -10°C. When the outside air temperature has become equal to or lower than -10°C (YES in S276), the process proceeds to step S277. When the outside air temperature is higher than -10°C (NO in S276), the process proceeds to step S280 (see Fig. 13).

In step S277, ECU 510 controls eight-way valve 280 such that third closed circuit 31 (see Fig. 12B) connecting first closed circuit 11 to flow path 210a is formed. Third closed circuit 31 and radiator 231 are separated and independent from each other. When thermal management circuit 200 has already been configured in the second communication pattern (i.e., when the process has passed through S261), ECU 510 maintains thermal management circuit 200 in the second communication pattern.

Note that only one of a series of processes in steps S274 and S275 and a series of processes in steps S276 and S277 may be performed.

Since other configurations and effects in the second embodiment are the same as those in the above-described first embodiment, the description thereof will not be repeated.

### [Third Embodiment]

Unlike the second embodiment in which eight-way valve 280 is employed, two six-way valves are employed in the third embodiment. The same configurations as those in the second embodiment are denoted by the same reference characters, and the description thereof will not be repeated.

### <Overall Configuration>

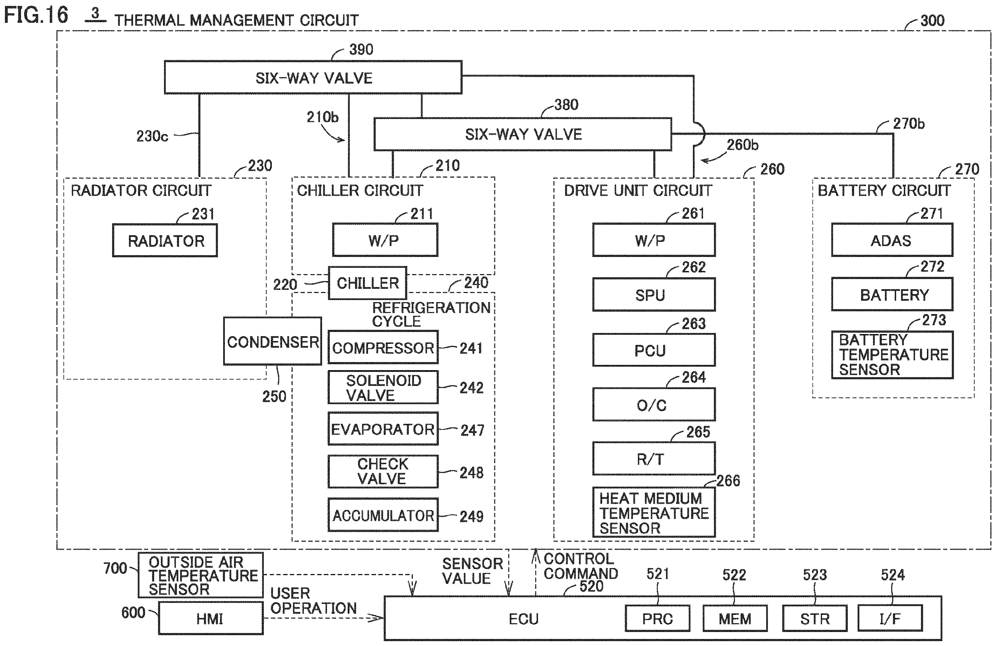

Fig. 16 is a diagram showing an example of an overall configuration of a thermal management system 3 according to the third embodiment in the present disclosure. Thermal management system 3 is different from thermal management system 2 (see Fig. 9) according to the second embodiment in that it includes a thermal management circuit 300 in place of thermal management circuit 200 and an ECU 520 in place of ECU 510.

Thermal management circuit 300 includes chiller circuit 210, chiller 220, radiator circuit 230, refrigeration cycle 240, condenser 250, drive unit circuit 260, battery circuit 270, a six-way valve 380, and a six-way valve 390. Each of six-way valves 380 and 390 is an example of the "switching device" in the present disclosure.

Chiller 220 is provided in a flow path 210b of chiller circuit 210. Flow path 210b is provided to connect chiller circuit 210 to each of six-way valves 380 and 390. Flow path 210b is an example of the "fourth flow path" in the present disclosure.

Radiator 231 is provided in a flow path 230c. Flow path 230c is provided to connect radiator 231 to six-way valve 390. Flow path 230c is an example of the "third flow path" in the present disclosure.

Water pump 261, SPU 262, PCU 263, oil cooler 264, and reservoir tank 265 are provided in a flow path 260b of drive unit circuit 260. Flow path 260b is provided to connect drive unit circuit 260 to each of six-way valves 380 and 390. Flow path 260b is an example of the "second flow path" in the present disclosure.

Battery 272 is provided in a flow path 270b of battery circuit 270. Flow path 270b is provided to connect battery circuit 270 to six-way valve 380. Flow path 270b is an example of the "first flow path" in the present disclosure.

ECU 520 controls thermal management circuit 300. ECU 520 includes a processor 521, a memory 522, a storage 523, and an interface 524.

### <Configuration of Thermal Management Circuit >

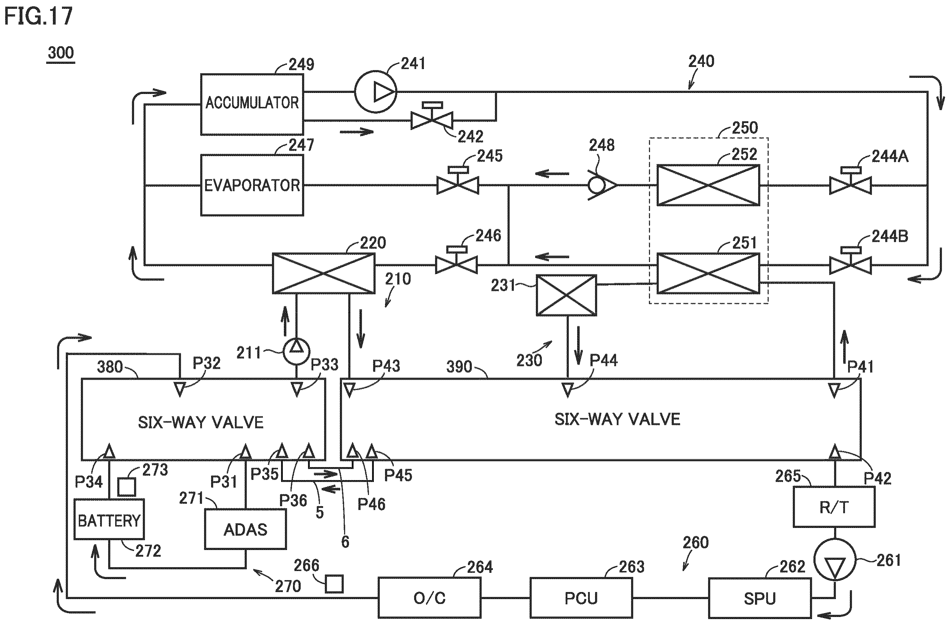

Fig. 17 is a diagram showing an example of a configuration of thermal management circuit 300 according to the third embodiment. As shown in Fig. 17, six-way valve 380 includes six ports P31 to P36. Six-way valve 390 includes six ports P41 to P46.

Six-way valve 380 is connected to six-way valve 390. Specifically, port P35 of six-way valve 380 and port P45 of six-way valve 390 are connected by a flow path 5. Further, port P36 of six-way valve 380 and port P46 of six-way valve 390 are connected by a flow path 6.

The heat medium circulating through chiller circuit 210 flows through a path passing through six-way valve 380 (port P33), water pump 211, chiller 220, and six-way valve 390 (port P43).

The heat medium circulating through radiator circuit 230 flows through six-way valve 390 (port P41), water-cooled condenser 251, radiator 231, and six-way valve 390 (port P44).

The heat medium (a cooling liquid) circulating through drive unit circuit 260 flows through a path passing through six-way valve 390 (port P42), reservoir tank 265, water pump 261, SPU 262, PCU 263, oil cooler 264, and six-way valve 380 (port P32).

The heat medium (a cooling liquid) circulating through battery circuit 270 flows through a path passing through six-way valve 380 (port P31), ADAS 271, battery 272, and six-way valve 380 (port P34).

### <Communication Pattern>

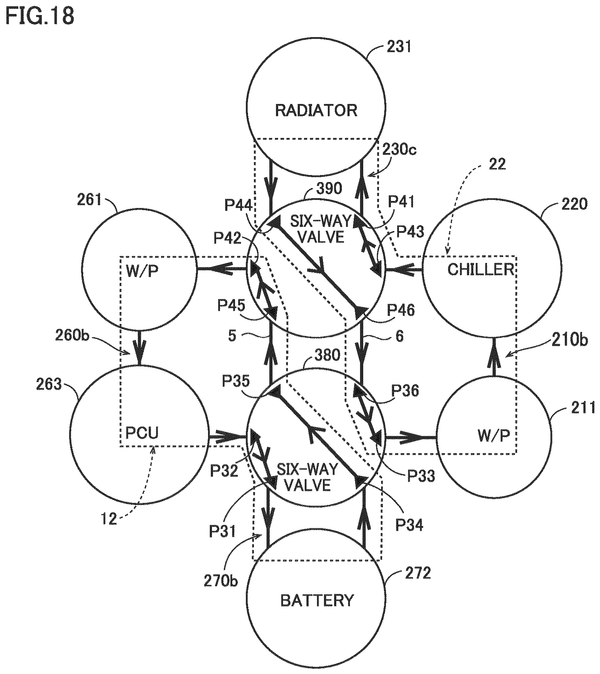

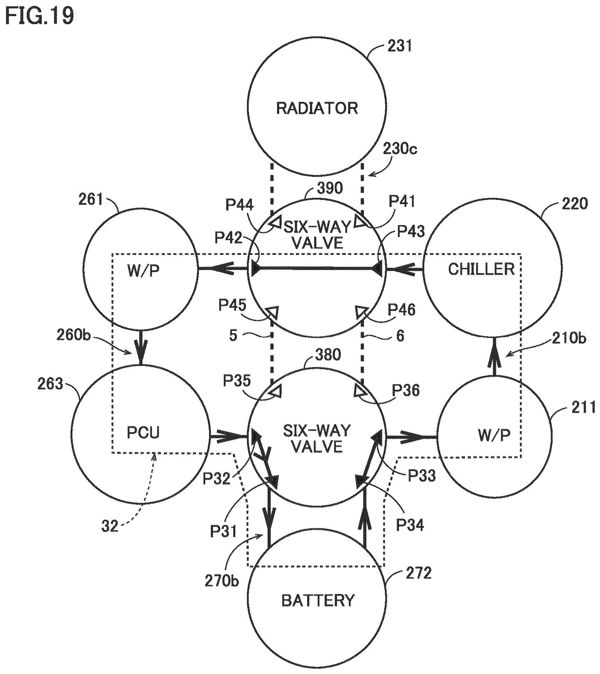

Figs. 18 and 19 are conceptual diagrams showing outlines of the first communication pattern and the second communication pattern, respectively, of thermal management circuit 300 formed by controlling six-way valves 380 and 390. The second communication pattern is an example of the "temperature rising circuit" in the present disclosure.

In the first communication pattern shown in Fig. 18, six-way valve 380 serves to form: a path through which ports P31 and P32 communicate with each other; a path through which ports P34 and P35 communicate with each other; and a path through which ports P33 and P36 communicate with each other.

In the first communication pattern, six-way valve 390 serves to form: a path through which ports P42 and P45 communicate with each other; a path through which ports P44 and P46 communicate with each other; and a path through which ports P41 and P43 communicate with each other.

In the first communication pattern, a path (flow path 5) through which ports P35 and P45 communicate with each other is formed, and a path (flow path 6) through which ports P36 and P46 communicate with each other is formed.

Thereby, connection is established between flow path 260b in which PCU 263 and the like are provided, six-way valve 380, six-way valve 390, and flow path 270b in which battery 272 is provided. As a result, the heat medium flows through a first closed circuit 12 passing through water pump 261, PCU 263, six-way valve 380, battery 272, six-way valve 380, six-way valve 390, and water pump 261. First closed circuit 12 is an example of the "second connection flow path" in the present disclosure.

Further, connection is established between flow path 210b in which chiller 220 is provided, flow path 230c in which radiator 231 is provided, six-way valve 380, and six-way valve 390. As a result, the heat medium flows through a second closed circuit 22 passing through water pump 211, chiller 220, radiator 231, six-way valve 390, six-way valve 380, and water pump 211. Second closed circuit 22 is an example of the "third connection flow path" in the present disclosure.

In the second communication pattern shown in Fig. 19, six-way valve 380 serves to form: a path through which ports P31 and P32 communicate with each other; and a path through which ports P33 and P34 communicate with each other. Further, six-way valve 390 serves to form a path through which ports P42 and P43 communicate with each other.

Thereby, the heat medium flows through a third closed circuit 32 passing through chiller 220, six-way valve 390, water pump 261, PCU 263, six-way valve 380, battery 272, six-way valve 380, water pump 211, and chiller 220. Third closed circuit 32 is an example of the "first connection flow path" in the present disclosure.

### <Method of Controlling Thermal Management Circuit>

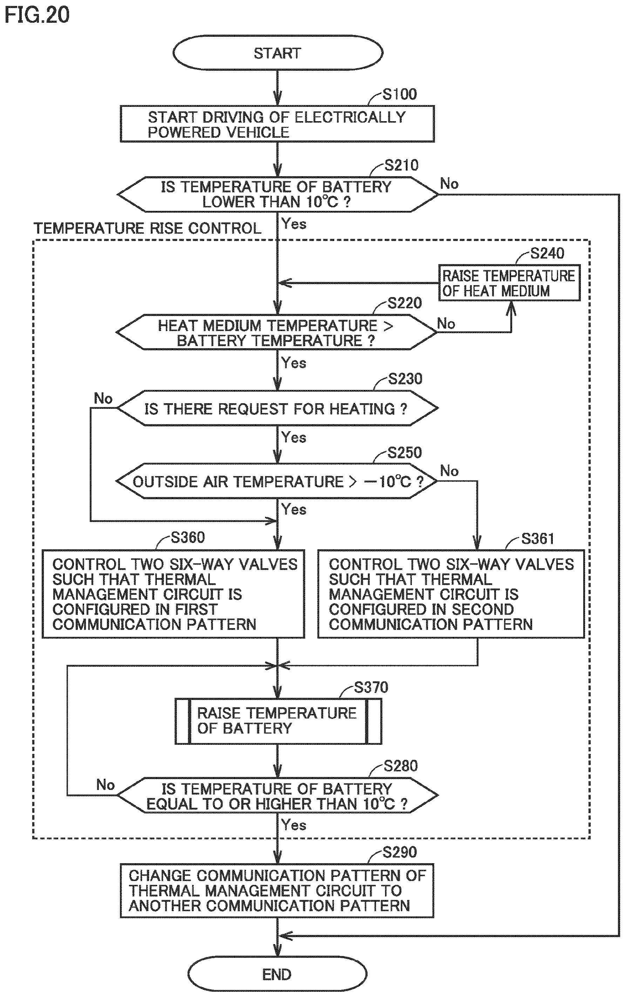

A method of controlling thermal management system 3 will be hereinafter described with reference to a flowchart in Fig. 20. The description of the same steps as those in the control flow in the above-described second embodiment will not be repeated.

If it is determined as NO in step S230 or YES in step S250, the process proceeds to step S360. If it is determined as NO in step S250, the process proceeds to step S361.

In step S360, ECU 520 controls six-way valves 380 and 390 such that thermal management circuit 300 is configured in the first communication pattern shown in Fig. 18. Then, the process proceeds to step S370.

In step S361, ECU 520 controls six-way valves 380 and 390 such that thermal management circuit 300 is configured in the second communication pattern shown in Fig. 19. Then, the process proceeds to step S370.

Since the process in step S370 is the same as the process in step S270 (see Figs. 14 and 15) in the above-described second embodiment, the description thereof will not be repeated.

Other configurations and effects in the third embodiment are the same as those in the above-described second embodiment.

### [Fourth Embodiment]

Unlike the second embodiment in which eight-way valve 280 is employed, a ten-way valve is employed in the fourth embodiment. The same configurations as those in the second embodiment are denoted by the same reference characters, and the description thereof will not be repeated.

### <Overall Configuration>

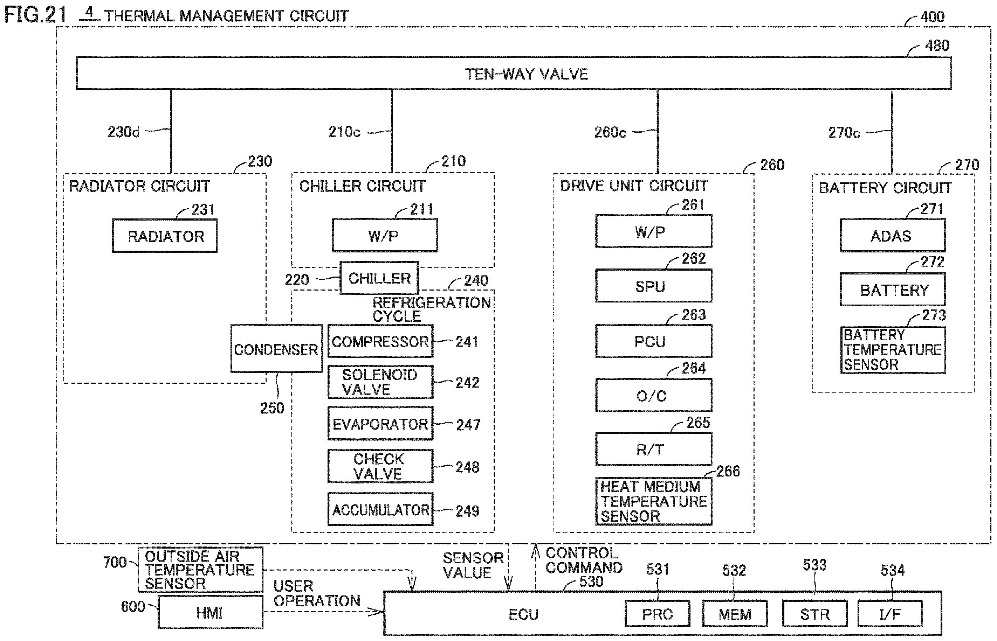

Fig. 21 is a diagram showing an example of an overall configuration of a thermal management system 4 according to the fourth embodiment of the present disclosure. Thermal management system 4 is different from thermal management system 2 (see Fig. 9) according to the second embodiment in that it includes a thermal management circuit 400 in place of thermal management circuit 200 and an ECU 530 in place of ECU 510.

Thermal management circuit 400 includes chiller circuit 210, chiller 220, radiator circuit 230, refrigeration cycle 240, condenser 250, drive unit circuit 260, battery circuit 270, and a ten-way valve 480. Ten-way valve 480 is an example of the "switching device" in the present disclosure.

Chiller 220 is provided in a flow path 210c of chiller circuit 210. Flow path 210c is provided to connect chiller circuit 210 and ten-way valve 480. Flow path 210c is an example of the "fourth flow path" in the present disclosure.

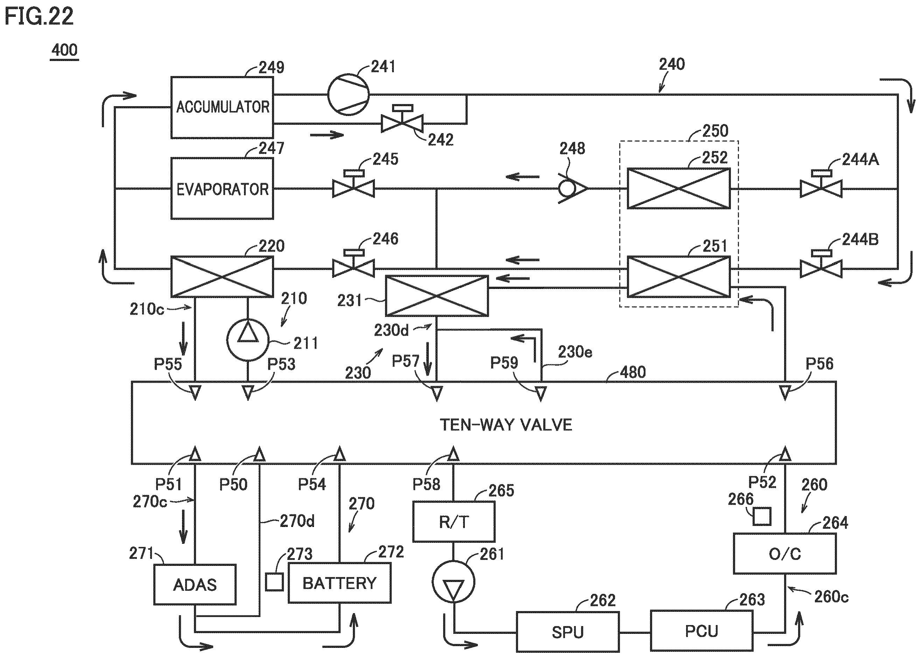

Radiator 231 is provided in a flow path 230d. Flow path 230d is provided to connect radiator 231 and ten-way valve 480. Flow path 230d includes a bypass flow path 230e (see Fig. 22). Bypass flow path 230e is provided to connect ten-way valve 480 to a portion between radiator 231 and water-cooled condenser 251. Flow path 230d is an example of the "third flow path" in the present disclosure.

Water pump 261, SPU 262, PCU 263, oil cooler 264, and reservoir tank 265 are provided in a flow path 260c of drive unit circuit 260. Flow path 260c is provided to connect drive unit circuit 260 and ten-way valve 480. Flow path 260c is an example of the "second flow path" in the present disclosure.

Battery 272 is provided in a flow path 270c of battery circuit 270. Flow path 270c is provided to connect battery circuit 270 and ten-way valve 480. Flow path 270c includes a bypass flow path 270d (see Fig. 22). Bypass flow path 270d is provided to connect ten-way valve 480 to a portion between ADAS 271 and battery 272. Flow path 270c is an example of the "first flow path" in the present disclosure.

ECU 530 controls thermal management circuit 400. ECU 530 includes a processor 531, a memory 532, a storage 533, and an interface 534.

### <Configuration of Thermal Management Circuit>

Fig. 22 is a diagram showing an example of a configuration of thermal management circuit 400 according to the fourth embodiment. As shown in Fig. 22, ten-way valve 480 includes ten ports P50 to P59.

The heat medium circulating through chiller circuit 210 flows through a path passing through ten-way valve 480 (port P53), water pump 211, chiller 220, and ten-way valve 480 (port P55).

The heat medium circulating through radiator circuit 230 flows through one or both of a first path and a second path. The first path passes through ten-way valve 480 (port P56), water-cooled condenser 251, radiator 231, and ten-way valve 480 (port P57). The second path passes through ten-way valve 480 (port P59), bypass flow path 230e, and ten-way valve 480 (port P57).

The heat medium (a cooling liquid) circulating through drive unit circuit 260 flows through a path passing through ten-way valve 480 (port P58), reservoir tank 265, water pump 261, SPU 262, PCU 263, oil cooler 264, and ten-way valve 480 (port P52).

The heat medium (a cooling liquid) circulating through battery circuit 270 flows through one or both of a first path and a second path. The first path passes through ten-way valve 480 (port P51), ADAS 271, battery 272, and ten-way valve 480 (port P54). The second path passes through ten-way valve 480 (port P51), ADAS 271, bypass flow path 270d, and ten-way valve 480 (port P50).

### <Communication Pattern>

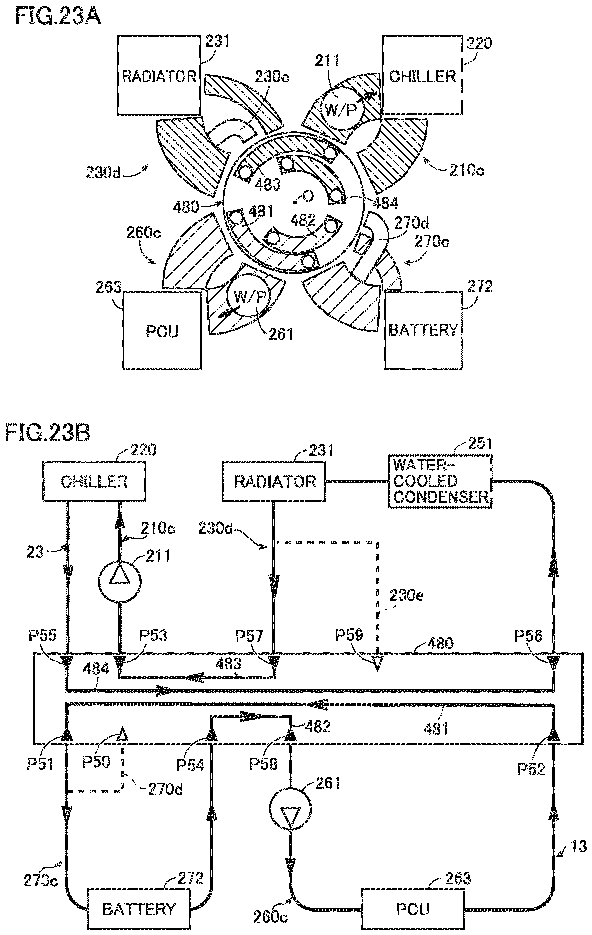

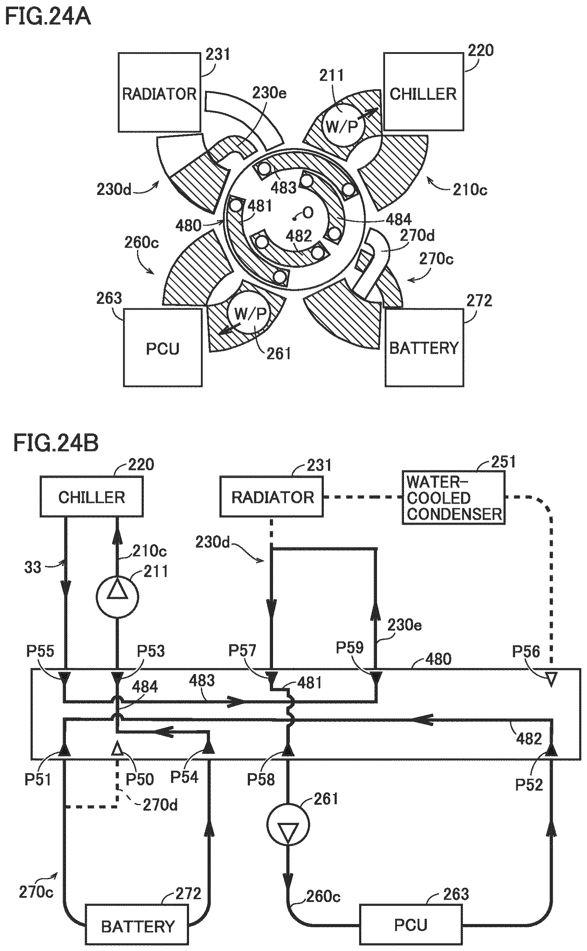

Fig. 23A (Fig. 23B) and Fig. 24A (Fig. 24B) are conceptual diagrams showing outlines of the first communication pattern and the second communication pattern, respectively, by ten-way valve 480. The second communication pattern is an example of the "temperature rising circuit" in the present disclosure.

In the first communication pattern (see Figs. 23A and 23B), an internal flow path 481 of ten-way valve 480 serves to form a path through which ports P52 and P51 communicate with each other. Further, in the first communication pattern, an internal flow path 482 of ten-way valve 480 serves to form a path through which ports P54 and P58 communicate with each other. In the first communication pattern, an internal flow path 483 of ten-way valve 480 serves to form a path through which ports P57 and P53 communicate with each other. Further, in the first communication pattern, an internal flow path 484 of ten-way valve 480 serves to form a path through which ports P55 and P56 communicate with each other.

Thereby, connection is established through ten-way valve 480 between flow path 260c in which PCU 263 and the like are provided and flow path 270c in which battery 272 is provided. As a result, the heat medium flows through first closed circuit 13 passing through water pump 261, PCU 263, ten-way valve 480, battery 272, ten-way valve 480, and water pump 261. First closed circuit 13 is an example of the "second connection flow path" in the present disclosure.

Further, connection is established through ten-way valve 480 between flow path 210c in which chiller 220 is provided and flow path 230d (radiator 231) of radiator circuit 230. As a result, the heat medium flows through a second closed circuit 23 passing through water pump 211, chiller 220, ten-way valve 480, water-cooled condenser 251, radiator 231, ten-way valve 480, and water pump 211. Second closed circuit 23 is an example of the "third connection flow path" in the present disclosure.

In the example shown in Figs. 23A and 23B, first closed circuit 13 and second closed circuit 23 are separated and independent from each other.

Fig. 24A shows the second communication pattern in the state in which the circulation paths of internal flow paths 481 to 484 are switched from the state in Fig. 23A. In this case, internal flow path 481 of ten-way valve 480 serves to form a path through which ports P56 and P57 communicate with each other. Further, internal flow path 482 of ten-way valve 480 serves to form a path through which ports P52 and P51 communicate with each other. Further, internal flow path 483 of ten-way valve 480 serves to form a path through which ports P55 and P59 communicate with each other. Further, internal flow path 484 of ten-way valve 480 serves to form a path through which ports P53 and P54 communicate with each other.

Thus, as shown in Fig. 24B, the heat medium flows through a third closed circuit 33 passing through water pump 261, PCU 263, ten-way valve 480, battery 272, ten-way valve 480, water pump 211, chiller 220, ten-way valve 480, bypass flow path 230e, ten-way valve 480, and water pump 261. Third closed circuit 33 is an example of the "first connection flow path" in the present disclosure.

Therefore, rotating internal flow paths 481 to 484 makes it possible to easily switch the communication pattern between the first communication pattern (see Figs. 23A and 23B) and the second communication pattern (see Figs. 24A and 24B).

### <Method of Controlling Thermal Management Circuit>

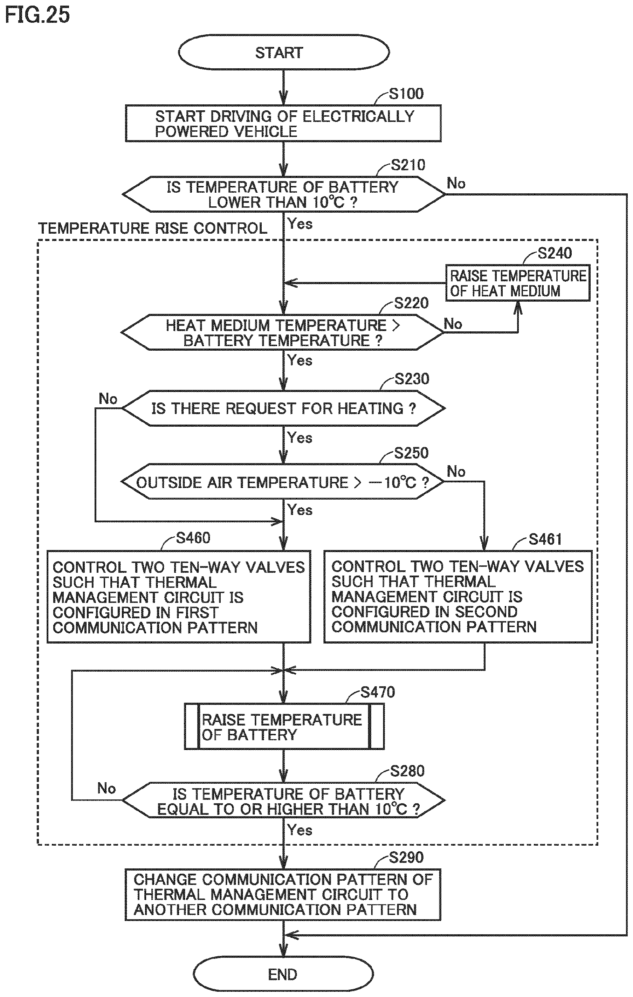

A method of controlling thermal management system 4 will be hereinafter described with reference to a flowchart in Fig. 25. Note that the flow shown in Fig. 25 is merely an example, and the control in the present disclosure is not limited to the example shown in Fig. 25. Further, the description of the same steps as those in the control flow in the above-described second embodiment will be simplified or omitted.

If it is determined as NO in step S230 or YES in step S250, the process proceeds to step S460. If it is determined as NO in step S250, the process proceeds to step S461.

In step S460, ECU 530 controls ten-way valve 480 such that thermal management circuit 400 is configured in the first communication pattern shown in Figs. 23A and 23B. Then, the process proceeds to step S470.

In step S461, ECU 530 controls ten-way valve 480 such that thermal management circuit 400 is configured in the second communication pattern shown in Figs. 24A and 24B. Then, the process proceeds to step S470.

Since the process in step S470 is the same as the process in step S270 (see Figs. 14 and 15) in the above-described second embodiment, the description thereof will not be repeated.

Other configurations and effects in the fourth embodiment are the same as those in the above-described second embodiment.

In the examples described in the above first to fourth embodiments, the temperature rise control for the battery is performed when driving of electrically powered vehicle 1a is disclosed (when the traveling system is activated), but the present disclosure is not limited thereto. The temperature rise control may be started at the time point before a prescribed time period (for example, 30 minutes) from the scheduled time for starting the next traveling. In the cases described above, control may be performed not to cause torque in the motor of the electrically powered vehicle (for example, to allow flowing of only a current in one phase among the currents in three phases that are to be supplied to the motor).

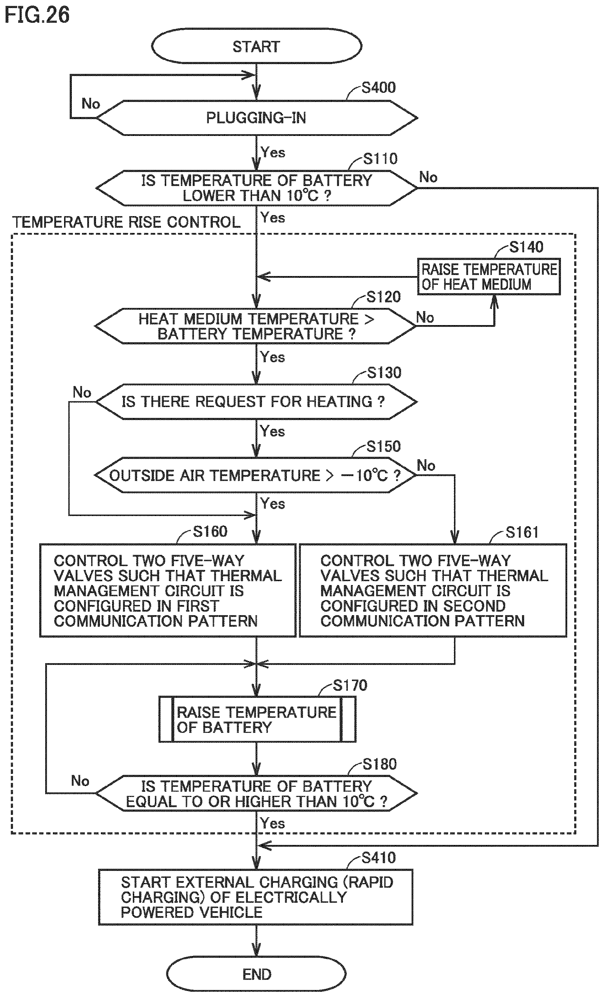

Further, as shown in Fig. 26, the temperature rise control may be performed at the start of external charging (for example, rapid charging) by which the battery is charged with use of charging power supplied from a charging facility (not shown) external to the electrically powered vehicle. For example, the process proceeds to step S110 upon detection, by ECU 500, of plugging-in of a charging plug in step S400. When it is determined in step S180 or S110 that the temperature of battery 173 is equal to or higher than 10°C, the process proceeds to step S410. Note that 10°C is an example of the "prescribed temperature" in the present disclosure. In step S410, ECU 500 starts to control external charging (rapid charging). In the example described with reference to Fig. 26, plugging-in triggers the temperature rise control for the battery. Even before plugging-in, however, the temperature rise control for the battery may be started, for example, at the time point before a prescribed time period (for example, 10 minutes) from the scheduled time for starting the external charging (for starting to supply the charging power). Fig. 26 representatively shows an example in which the above-mentioned control is applied to the first embodiment, but the above-mentioned control may also be applied to the second embodiment. Further, the temperature rise control may be performed at the time when normal charging (low-speed charging slower in charging speed than rapid charging) is started.

In the examples described in the above first to fourth embodiments, the thermal management system is provided in the electrically powered vehicle, but the present disclosure is not limited thereto. The thermal management system may be provided in electrical equipment (for example, a stationary power storage device) different from the electrically powered vehicle.

In the examples described in the above first to fourth embodiments, the output of the water pump is increased with time, but the present disclosure is not limited thereto. For example, the output of the water pump may be constant.

In the examples described in the above first to fourth embodiments, the battery is raised in temperature by the first communication pattern when the outside air temperature is higher than -10°C, but the present disclosure is not limited thereto. When the outside air temperature is higher than -10°C, a circuit configured in a communication pattern other than the first communication pattern may be formed to raise the temperature of the battery.

In the examples described in the above first to fourth embodiments, the communication pattern of the thermal management circuit is controlled based on the outside air temperature and the presence or absence of the request for heating, but the present disclosure is not limited thereto. The communication pattern of the thermal management circuit may be controlled based on only one of the outside air temperature and the presence or absence of the request for heating. Further, the communication pattern of the thermal management circuit may be controlled without considering any of the outside air temperature and the presence or absence of the request for heating.

In the examples described in the above first to fourth embodiments, the first communication pattern (the temperature rising circuit) is formed when the temperature of the heat medium in the flow path in which the PCU (the drive device) is provided is higher than the temperature of the battery, but the present disclosure is not limited thereto. The first communication pattern may be formed, for example, based only on the temperature of the battery irrespective of the relation between the temperature of the heat medium and the temperature of the battery.

In the examples described in the above first to fourth embodiments, the output of the water pump is increased to a prescribed value when the difference between the temperature of the heat medium and the temperature of the battery exceeds a prescribed threshold value, but the present disclosure is not limited thereto. For example, the output of the water pump may be gradually increased according to (proportionally to) the increase in the above-mentioned difference. Further, the output of the water pump may be increased to a prescribed value after an elapse of a prescribed time period (for example, 10 minutes) from the start of the temperature rise control in the state in which the first (second) communication pattern is formed.

In the examples described in the above first to fourth embodiments, the temperature rise control for the battery is performed at the time when driving of electrically powered vehicle 1a is started (at the time when the traveling system is activated), but the present disclosure is not limited thereto. For example, the temperature rise control may be performed not when driving of electrically powered vehicle 1a is started (not when the traveling system is activated) but when the temperature of the battery becomes lower than a prescribed threshold value (10°C in the above-described embodiments). In this case, the ECU may acquire the detected value of the temperature of the battery every prescribed period (for example, one hour).

In the examples described in the above first to fourth embodiments, the first communication pattern (the temperature rising circuit) is formed at the time when driving of electrically powered vehicle 1a is started (at the time when the traveling system is activated) and the temperature of the battery is raised with use of the current flowing through the battery, but the present disclosure is not limited thereto. For example, the first communication pattern may be formed after the end of traveling of electrically powered vehicle 1a (after the current stops flowing through the battery), and then the battery may be raised in temperature with use of the heat medium raised in temperature by heat generated in a PCU and the like. Further, the battery may be raised in temperature by causing a current higher than a normal current to flow through the battery in the state in which the second communication pattern is formed during traveling of electrically powered vehicle 1a.

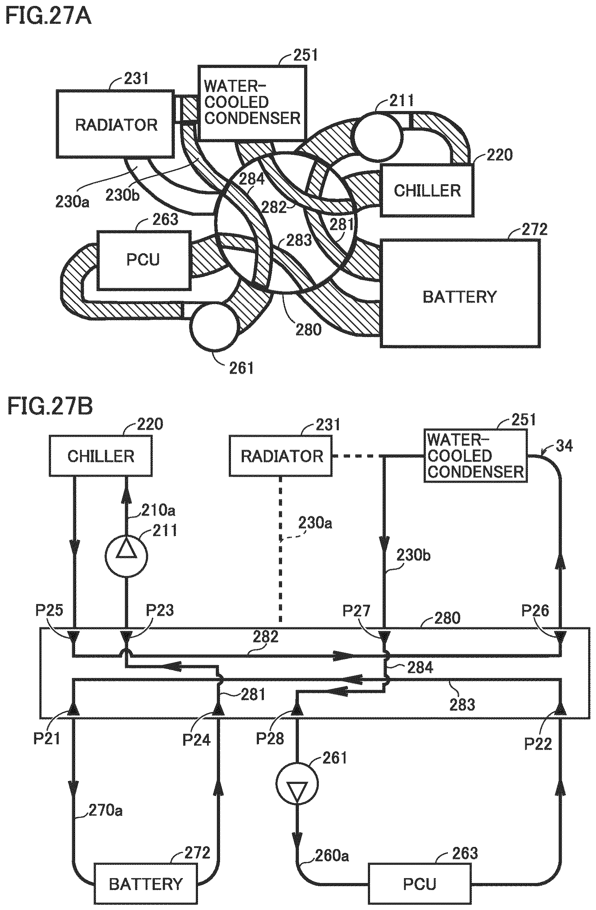

In the above-described second embodiment, the second communication pattern (see Figs. 12A and 12B) formed with eight-way valve 280 has been described, but the battery may be raised in temperature by a circuit other than the circuit shown in Figs. 12A and 12B. For example, a thermal management circuit as shown in Figs. 27A and 27B may be formed. In the communication pattern shown in Figs. 27A and 27B, internal flow path 281 of eight-way valve 280 serves to form a path through which ports P23 and P24 communicate with each other. Further, in the above-mentioned communication pattern, internal flow path 282 of eight-way valve 280 serves to form a path through which ports P25 and P26 communicate with each other. Further, in the above-mentioned communication pattern, internal flow path 283 of eight-way valve 280 serves to form a path through which ports P21 and P22 communicate with each other. Further, in the above-mentioned communication pattern, internal flow path 284 of eight-way valve 280 serves to form a path through which ports P27 and P28 communicate with each other. Thereby, a closed circuit 34 is formed that passes through water pump 211, chiller 220, port P25, port P26, water-cooled condenser 251, port P27, port P28, water pump 261, PCU 263, port P22, port P21, battery 272, port P24, port P23, and water pump 211. Closed circuit 34 is an example of the "first connection flow path" in the present disclosure.

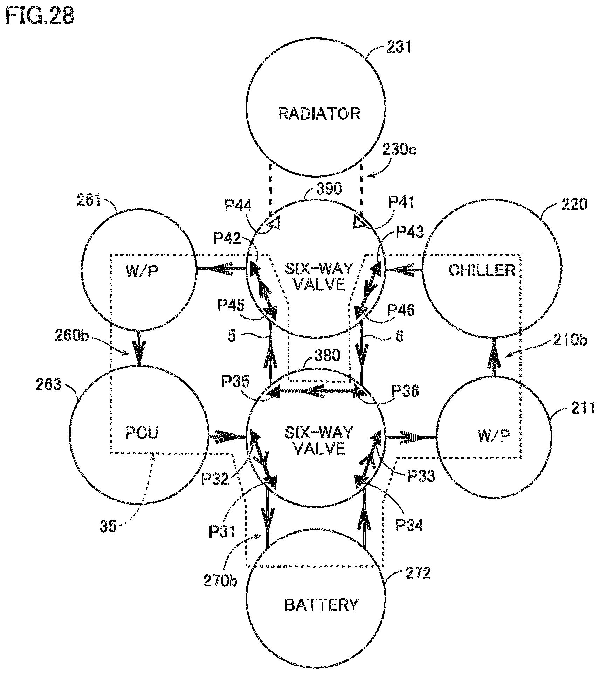

In the above-described third embodiment, the second communication pattern (see Fig. 19) formed with six-way valve 380 has been described, but the battery may be raised in temperature by a circuit other than the circuit shown in Fig. 19. For example, thermal management circuits as shown in Figs. 28 to 30 may be formed.

In the communication pattern shown in Fig. 28, six-way valve 380 serves to form: a path through which ports P31 and P32 communicate with each other; a path through which ports P33 and P34 communicate with each other; and a path through which ports P35 and P36 communicate with each other. Further, six-way valve 390 serves to form: a path through which ports P42 and P45 communicate with each other; and a path through which ports P43 and P46 communicate with each other. Further, a path (flow path 5) through which ports P35 and P45 communicate with each other is formed, and a path (flow path 6) through which ports P36 and P46 communicate with each other is formed. Thereby, a closed circuit 35 is formed that passes through water pump 211, chiller 220, port P43, port P46, port P36, port P35, port P45, port P42, water pump 261, PCU 263, port P32, port P31, battery 272, port P34, port P33, and water pump 211. Closed circuit 35 is an example of the "first connection flow path" in the present disclosure.

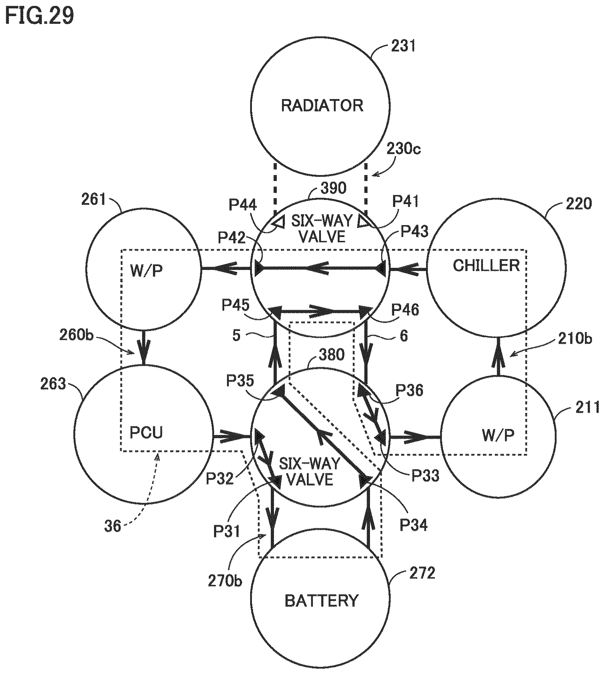

In the communication pattern shown in Fig. 29, six-way valve 380 serves to form: a path through which ports P31 and P32 communicate with each other; a path through which ports P34 and P35 communicate with each other; and a path through which ports P36 and P33 communicate with each other. Further, six-way valve 390 serves to form: a path through which ports P42 and P43 communicate with each other; and a path through which ports P45 and P46 communicate with each other. Further, a path (flow path 5) through which ports P35 and P45 communicate with each other is formed, and a path (flow path 6) through which ports P36 and P46 communicate with each other is formed. Thereby, a closed circuit 36 is formed that passes through water pump 211, chiller 220, port P43, port P42, water pump 261, PCU 263, port P32, port P31, battery 272, port P34, port P35, port P45, port P46, port P36, port P33, and water pump 211. Closed circuit 36 is an example of the "first connection flow path" in the present disclosure.

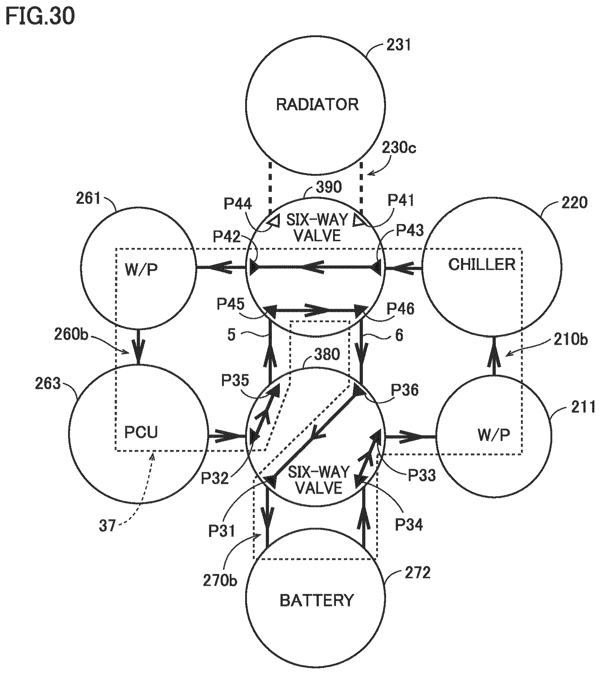

In the communication pattern shown in Fig. 30, six-way valve 380 serves to form: a path through which ports P31 and P36 communicate with each other; a path through which ports P33 and P34 communicate with each other; and a path through which ports P32 and P35 communicate with each other. Further, six-way valve 390 serves to form: a path through which ports P42 and P43 communicate with each other; and a path through which ports P45 and P46 communicate with each other. Further, a path (flow path 5) through which ports P35 and P45 communicate with each other is formed, and a path (flow path 6) through which ports P36 and P46 communicate with each other is formed. Thereby, a closed circuit 37 is formed that passes through water pump 211, chiller 220, port P43, port P42, water pump 261, PCU 263, port P32, port P35, port P45, port P46, port P36, port P31, battery 272, port P34, port P33, and water pump 211. Closed circuit 37 is an example of the "first connection flow path" in the present disclosure.

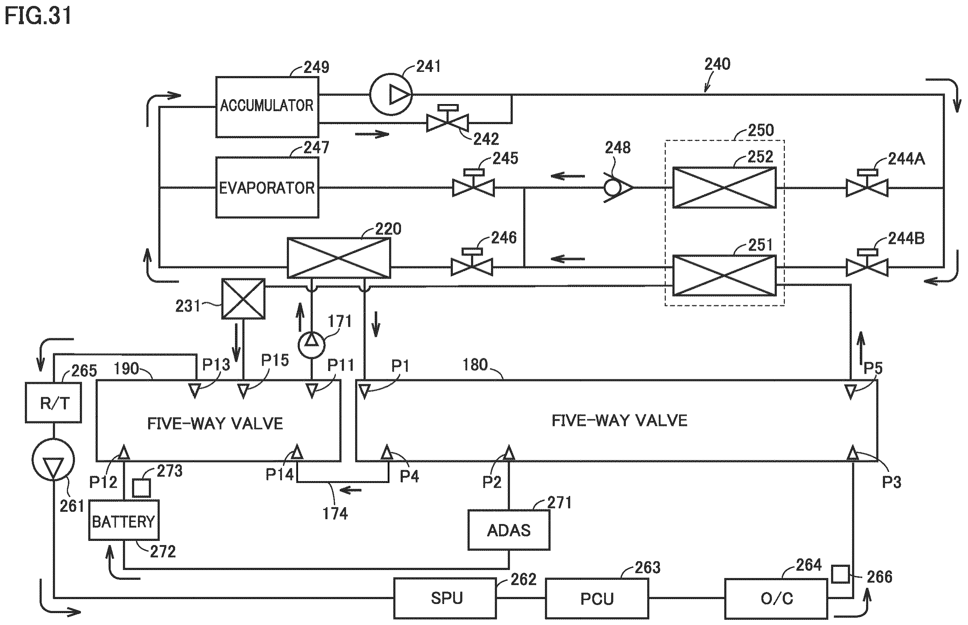

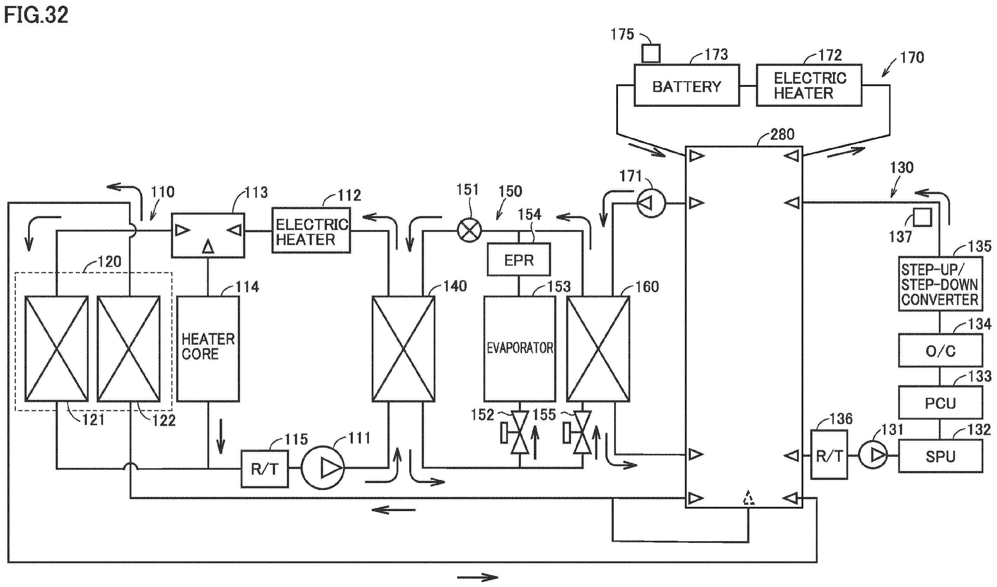

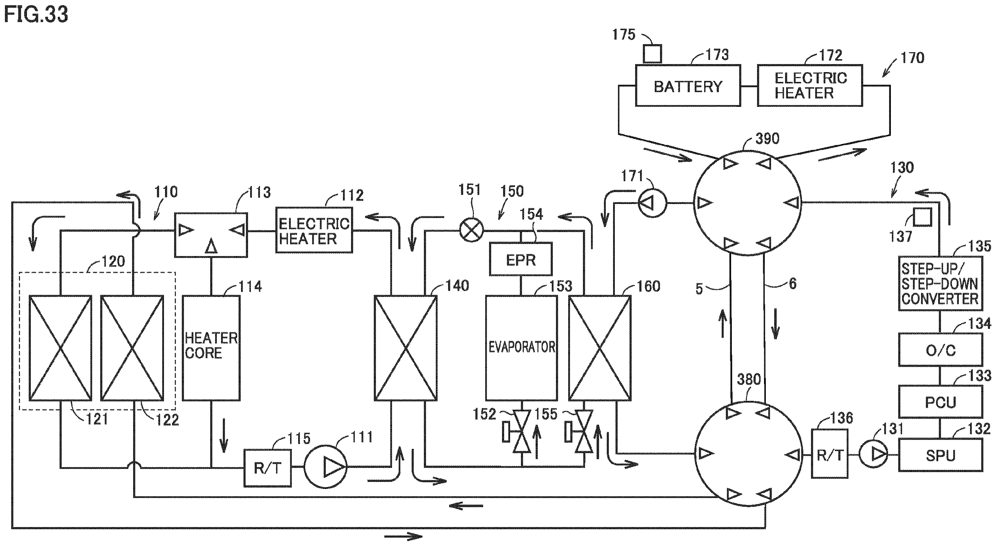

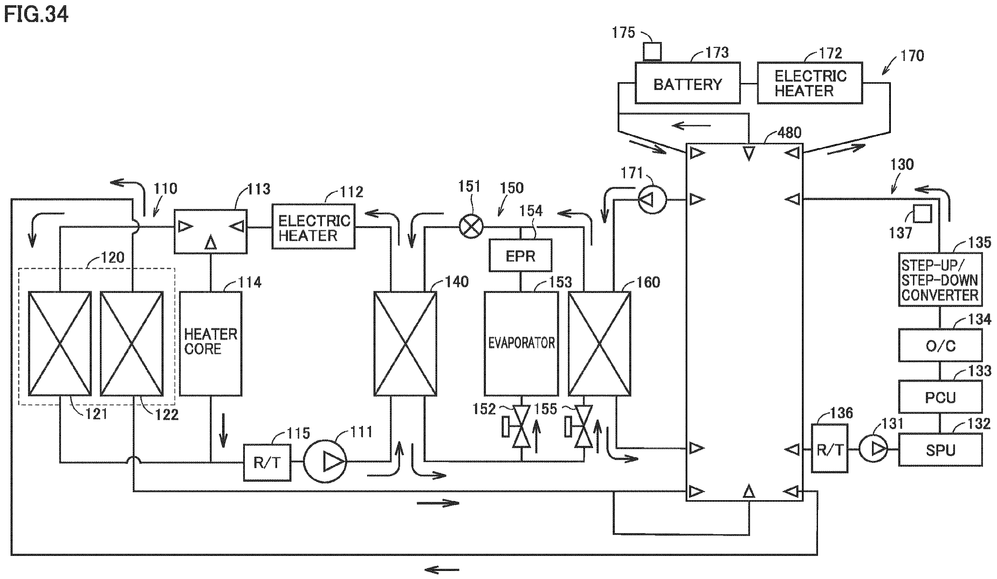

In the example described in the above first embodiment, high-temperature circuit 110 is provided in thermal management circuit 100, but the present disclosure is not limited thereto. High-temperature circuit 110 may not be provided in thermal management circuit 100 (see Fig. 31). Further, in the second to fourth embodiments, a high-temperature circuit (see Figs. 32 to 34) may be provided as in the above-described first embodiment.

Note that the configurations (processes) in the above-described embodiments and the modifications thereof may be combined with one another.

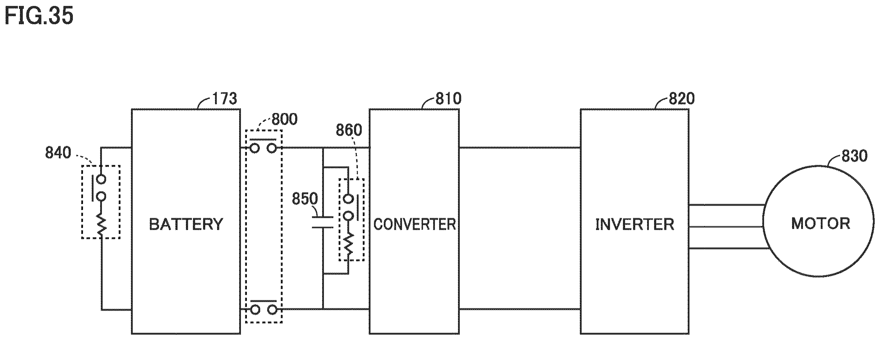

The following describes temperature rise control for a battery in detail with reference to Fig. 35. Battery 173 is connected to a converter 810 through a system main relay (SMR) 800. Converter 810 is connected to an inverter 820. Inverter 820 is connected to a motor 830. Further, a discharge circuit 840 including a switch and a resistive element is connected to battery 173. A smoothing capacitor 850 is provided between battery 173 and converter 810. A discharge circuit 860 constituted of a switch and a resistive element is connected in parallel to smoothing capacitor 850. Note that Fig. 35 is shown representatively based on the configuration of the first embodiment, but the similar configuration may be applied also in each of the second to fourth embodiments.

The temperature rise control for battery 173 may include, for example, control to electrically disconnect SMR 800 and turn on the switch of discharge circuit 840. Thereby, the current flows through a closed circuit formed by battery 173 and discharge circuit 840. The temperature rise control for battery 173 may include control to turn off the switch of discharge circuit 840 and turn on the switches of SMR 800 and discharge circuit 860. Thereby, the current flows through a closed circuit formed by battery 173, SMR 800, and discharge circuit 860. Further, the temperature rise control for battery 173 may include control to cause a current, which has been adjusted not to generate torque in motor 830, to flow in the state in which SMR 800 is turned on and the switches of discharge circuits 840 and 860 are turned off.

### [Fifth Embodiment]

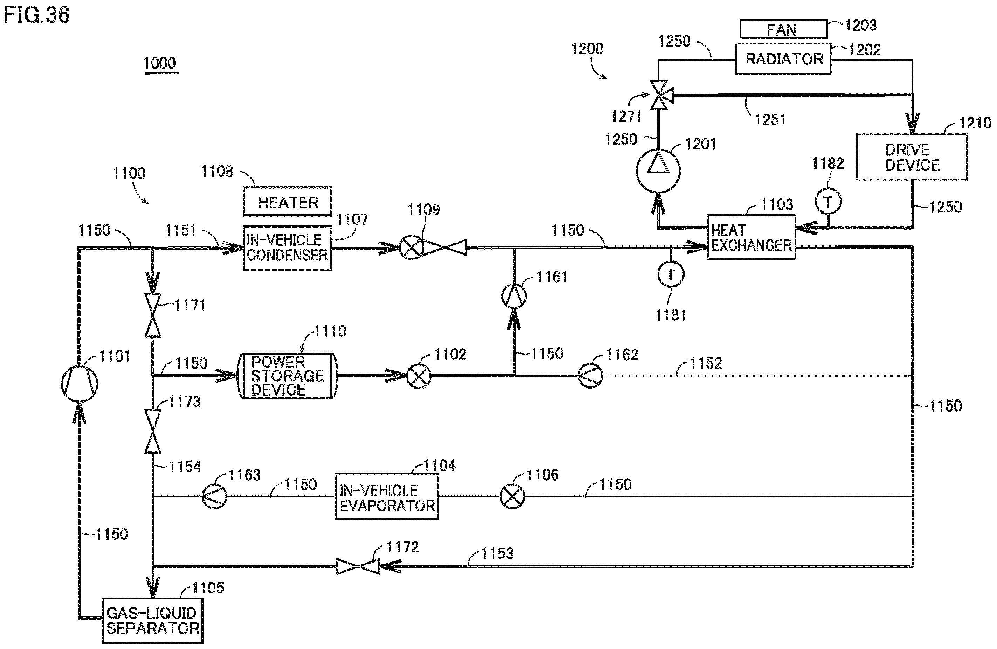

The following describes a thermal management circuit 1000 according to the fifth embodiment of the present disclosure with reference to Fig. 36. In the fifth embodiment, only portions different from those in the first embodiment will be described, but the descriptions of the same structures, functions, and effects as those in the first embodiment will not be repeated.

### <Overall Configuration>

The thermal management system (not shown) according to the fifth embodiment is different from thermal management system 1 (see Fig. 1) according to the first embodiment in that it includes thermal management circuit 1000 in place of thermal management circuit 100.

Thermal management circuit 1000 includes: a first thermal management system 1100 including a working medium (water, a medium lower in boiling point than water, or the like); and a second thermal management system 1200 including a heat medium (water or the like).

First thermal management system 1100 includes a compressor 1101, an expansion valve 1102, a heat exchanger 1103, an in-vehicle evaporator 1104, a gas-liquid separator 1105, an electronic expansion valve 1106, an in-vehicle condenser 1107, a heater 1108, an expansion opening/closing valve 1109, a power storage device 1110, a first circulation flow path 1150, a power storage device bypass flow path 1151, a heat exchanger bypass flow path 1152, and an in-vehicle evaporator bypass flow path 1153.

Compressor 1101 compresses a working medium. Expansion valve 1102 expands the working medium discharged from compressor 1101. Expansion valve 1102 is configured to expand the working medium bidirectionally.

Heat exchanger 1103 exchanges heat between the working medium having flowed out of expansion valve 1102 and the heat medium in second thermal management system 1200.

In-vehicle evaporator 1104 exchanges heat between the working medium having flowed out of heat exchanger 1103 and the air inside the vehicle (inside the compartment of the vehicle).

Gas-liquid separator 1105 separates the working medium having flowed into gas-liquid separator 1105 into a gas-phase working medium and a liquid-phase working medium.

First circulation flow path 1150 is a flow path through which the working medium circulates. First circulation flow path 1150 connects compressor 1101, expansion valve 1102, and heat exchanger 1103 in this order. In-vehicle evaporator 1104 is provided in a portion on the downstream side of heat exchanger 1103 in first circulation flow path 1150. Gas-liquid separator 1105 is provided in a portion between in-vehicle evaporator 1104 and compressor 1101 in first circulation flow path 1150.

Power storage device (battery) 1110 is connected to first circulation flow path 1150 so as to exchange heat with the working medium flowing through a portion between compressor 1101 and expansion valve 1102 in first circulation flow path 1150. In other words, power storage device 1110 is in thermal contact with a portion between compressor 1101 and expansion valve 1102 in first circulation flow path 1150.

Electronic expansion valve 1106 expands the working medium. Electronic expansion valve 1106 is provided in a portion between heat exchanger 1103 and in-vehicle evaporator 1104 in first circulation flow path 1150.

Power storage device bypass flow path 1151 is provided to bypass power storage device 1110.

In-vehicle condenser (chiller) 1107 is provided in power storage device bypass flow path 1151. In-vehicle condenser 1107 exchanges heat between the working medium discharged from compressor 1101 and the air inside the vehicle.

Heater 1108 heats the air to be supplied to the inside of the vehicle. Expansion opening/closing valve 1109 has a function as an expansion valve and a function as an opening/closing valve. Expansion opening/closing valve 1109 is provided in a portion on the downstream side of in-vehicle condenser 1107 in power storage device bypass flow path 1151. Expansion opening/closing valve 1109 expands the working medium having flowed out of in-vehicle condenser 1107.

Heat exchanger bypass flow path 1152 is connected to first circulation flow path 1150 so as to bypass heat exchanger 1103.

A first check valve 1161 is provided in a portion of first circulation flow path 1150, the portion being in parallel to heat exchanger bypass flow path 1152 and being on the upstream side of heat exchanger 1103. As indicated by arrows in Fig. 36, first check valve 1161 only allows the working medium to flow toward heat exchanger 1103.

A second check valve 1162 is provided in heat exchanger bypass flow path 1152. Second check valve 1162 only allows the working medium having flowed out of heat exchanger 1103 to flow toward power storage device 1110 through heat exchanger bypass flow path 1152.

In-vehicle evaporator bypass flow path 1153 is connected to first circulation flow path 1150 so as to bypass in-vehicle evaporator 1104.

A third check valve 1163 is provided in a portion of first circulation flow path 1150, the portion being in parallel to in-vehicle evaporator bypass flow path 1153 and being on the downstream side of in-vehicle evaporator 1104. Third check valve 1163 only allows the working medium to flow toward gas-liquid separator 1105.

A first opening/closing valve 1171 is provided in a portion of first circulation flow path 1150, the portion being in parallel to power storage device bypass flow path 1151 and being on the upstream side of power storage device 1110. A second opening/closing valve 1172 is provided in the in-vehicle evaporator bypass flow path 1153.

In the fifth embodiment, a first coupling flow path 1154 is connected to first circulation flow path 1150. First coupling flow path 1154 couples a portion between first opening/closing valve 1171 and power storage device 1110 in first circulation flow path 1150 to a portion between third check valve 1163 and gas-liquid separator 1105 in first circulation flow path 1150. A third opening/closing valve 1173 is provided in first coupling flow path 1154.

Second thermal management system 1200 includes a pump 1201, a radiator 1202, a fan 1203, a drive device 1210, a second circulation flow path 1250, and a radiator bypass flow path 1251.

Pump 1201 pressurizes the liquid-phase heat medium having flowed out of heat exchanger 1103. Radiator 1202 cools the heat medium having been discharged from pump 1201.

Fan 1203 is installed to face radiator 1202. Fan 1203 supplies cold air to radiator 1202. This promotes heat dissipation in radiator 1202.

Second circulation flow path 1250 is a flow path through which the heat medium circulates. Second circulation flow path 1250 connects heat exchanger 1103, pump 1201, and radiator 1202 in this order. Heat exchanger 1103 is connected to first circulation flow path 1150 and second circulation flow path 1250.

Drive device 1210 supplies drive power to electrical equipment (electrically powered vehicle 1a). Drive device 1210 includes devices operating at high voltages, such as a motor, a motor controller, charging power distribution triple-in-one, and the like. These devices generate a large amount of heat while they are operating. Drive device 1210 is connected to second circulation flow path 1250 so as to exchange heat with the heat medium flowing through a portion between radiator 1202 and heat exchanger 1103 in second circulation flow path 1250. In other words, drive device 1210 is in thermal contact with the portion between radiator 1202 and heat exchanger 1103 in second circulation flow path 1250.

Radiator bypass flow path 1251 is connected to second circulation flow path 1250 so as to bypass radiator 1202.

A three-way valve 1271 is provided at a portion of connection between second circulation flow path 1250 and the upstream-side end of radiator bypass flow path 1251. Three-way valve 1271 can switch the flowing state of the heat medium between the state in which the heat medium flows through second circulation flow path 1250 and the state in which the heat medium flows through radiator bypass flow path 1251. Three-way valve 1271 may be configured to be capable of switching the flowing state of the heat medium to the state in which the heat medium flows through at least one of second circulation flow path 1250 and radiator bypass flow path 1251.

First thermal management system 1100 and second thermal management system 1200 each include a switching device capable of: switching the flow path through which the working medium flows; and switching the flow path through which the heat medium flows. In the fifth embodiment, first opening/closing valve 1171, second opening/closing valve 1172, third opening/closing valve 1173, expansion opening/closing valve 1109, and three-way valve 1271 constitute a switching device. The switching device is capable of switching the mode of thermal management circuit 1000 to: a warming mode to warm power storage device 1110; a cooling mode to cool power storage device 1110; an in-vehicle cooling mode, an in-vehicle heating mode, or a mode obtained by combining these modes. Fig. 36 shows a mode obtained by combining the warming mode to warm power storage device 1110 and the in-vehicle heating mode.

When power storage device 1110 is raised in temperature, ECU 500 controls the switching device such that the mode shown in Fig. 36 is set. In this mode, first opening/closing valve 1171, second opening/closing valve 1172, and expansion valve 1109 are opened while third opening/closing valve 1173 is closed. Thus, as indicated by the arrows in Fig. 36, the working medium discharged from compressor 1101 exchanges heat with power storage device 1110 to thereby warm power storage device 1110. Then, the working medium having passed through power storage device 1110 expands in expansion valve 1102 to turn into a low-temperature liquid. Further, the working medium discharged from compressor 1101 exchanges heat, in the in-vehicle condenser 1107, with the air inside the vehicle. The working medium having passed through in-vehicle condenser 1107 expands in expansion valve 1109 to turn into a low-temperature liquid. The working medium expanded in each of expansion valve 1102 and expansion valve 1109 exchanges heat, in heat exchanger 1103, with the heat medium in second thermal management system 1200. Specifically, the working medium receives heat from the heat medium in heat exchanger 1103. The working medium having flowed out of heat exchanger 1103 flows into gas-liquid separator 1105 through in-vehicle evaporator bypass flow path 1153, and then flows into compressor 1101 again.

In the mode shown in Fig. 36, three-way valve 1271 allows the heat medium to pass through radiator bypass flow path 1251. Thus, the heat received by the heat medium from drive device 1210 is given to the working medium in heat exchanger 1103 but is not released in radiator 1202.

As described above, when power storage device 1110 is raised in temperature, the switching device connects first circulation flow path 1150 and power storage device bypass flow path 1151, and disconnects radiator 1202 from second circulation flow path 1250. The state in which first circulation flow path 1150 and power storage device bypass flow path 1151 are connected means the state in which the working medium flows through both power storage device bypass flow path 1151 (in-vehicle condenser 1107) and first circulation flow path 1150 (power storage device 1110).

ECU 500 preferably drives compressor 1101 upon satisfaction of a heat receiving condition on which the working medium receives heat from the heat medium in heat exchanger 1103. In other words, compressor 1101 preferably operates upon satisfaction of the heat receiving condition on which the working medium receives heat from the heat medium in heat exchanger 1103.

For example, the heat receiving condition may be set as a condition that the temperature of the heat medium flowing into heat exchanger 1103 is equal to or higher than the temperature of the working medium flowing into heat exchanger 1103. The temperature of the working medium flowing into heat exchanger 1103 is detected, for example, by a temperature sensor 1181 provided at an inlet portion of heat exchanger 1103 in first circulation flow path 1150. The temperature of the heat medium flowing into heat exchanger 1103 is detected, for example, by a temperature sensor 1182 provided at an inlet portion of heat exchanger 1103 in second circulation flow path 1250.

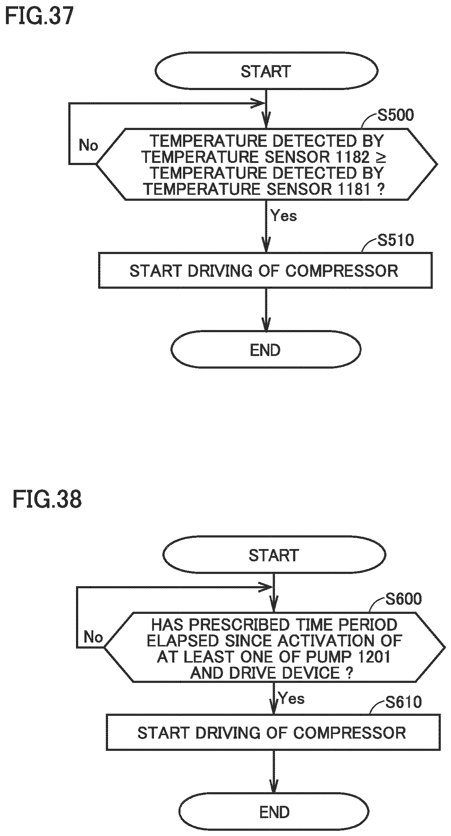

Specifically, as shown in Fig. 37, it is determined whether or not the temperature detected by temperature sensor 1182 is equal to or higher than the temperature detected by temperature sensor 1181 (step S500). When the temperature detected by temperature sensor 1182 is equal to or higher than the temperature detected by temperature sensor 1181 (YES in S500), driving of compressor 1101 is started (step S510). When the temperature detected by temperature sensor 1182 is lower than the temperature detected by temperature sensor 1181 (NO in S500), the process in step S500 is repeated.

Alternatively, the heat receiving condition may be set as a condition that a prescribed time period has elapsed since activation of at least one of pump 1201 and drive device 1210. In other words, compressor 1101 may be driven with a delay from the activation of at least one of pump 1201 and drive device 1210. In this case, the above-mentioned prescribed time period may be set as a time period during which the temperature of the heat medium flowing into heat exchanger 1103 becomes approximately equal to the temperature of the working medium flowing into heat exchanger 1103.

Specifically, as shown in Fig. 38, it is determined whether or not a prescribed time period has elapsed since activation of at least one of pump 1201 and drive device 1210 (step S600). When a prescribed time period has elapsed since activation of at least one of pump 1201 and drive device 1210 (YES in S600), driving of compressor 1101 is started (step S610). When a prescribed time period has not elapsed since activation of at least one of pump 1201 and drive device 1210 (NO in S600), the process in step S600 is repeated.

As described above, in the fifth embodiment, during the self-heating of power storage device 1110, first circulation flow path 1150 is connected to power storage device bypass flow path 1151, and radiator 1202 is separated from second circulation flow path 1250. Thus, the heat of the working medium discharged from compressor 1101 is effectively supplied to power storage device 1110, and the heat generated in drive device 1210 is effectively supplied to power storage device 1110 via the heat medium, heat exchanger 1103, and the working medium. This makes it possible to achieve both effective use of the heat generated from drive device 1210 and efficient self-heating of power storage device 1110.

### [Sixth Embodiment]

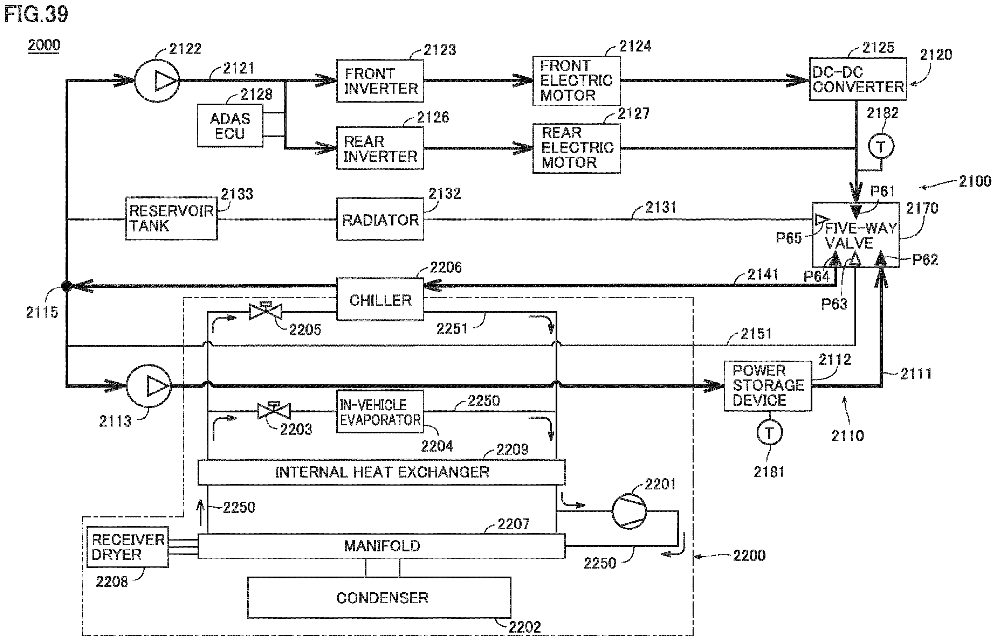

The following describes a thermal management circuit 2000 according to the sixth embodiment of the present disclosure with reference to Fig. 39. In the sixth embodiment, only portions different from those in the first embodiment will be described, but the descriptions of the same structures, functions, and effects as those in the first embodiment will not be repeated.

### <Overall Configuration>

The thermal management system (not shown) according to the sixth embodiment is different from thermal management system 1 (see Fig. 1) according to the first embodiment in that it includes thermal management circuit 2000 in place of thermal management circuit 100.

Thermal management circuit 2000 includes a heat medium circuit 2100 including a heat medium (water or the like) and a refrigeration circuit 2200 including a working medium (water, a medium lower in boiling point than water, or the like). The following first describes refrigeration circuit 2200.

Refrigeration circuit 2200 includes a compressor 2201, a condenser 2202, a first expansion valve 2203, an in-vehicle evaporator 2204, a second expansion valve 2205, a chiller 2206, a circulation flow path 2250, and an in-vehicle evaporator bypass flow path 2251.

Compressor 2201 compresses a working medium. Condenser 2202 condenses the working medium discharged from the compressor. First expansion valve 2203 expands the working medium having flowed out of condenser 2202. In-vehicle evaporator 2204 exchanges heat between the working medium having flowed out of first expansion valve 2203 and the air inside the vehicle (inside the compartment of the vehicle).

Circulation flow path 2250 is a flow path through which the working medium circulates. Circulation flow path 2250 connects compressor 2201, condenser 2202, first expansion valve 2203, and in-vehicle evaporator 2204 in this order.

In-vehicle evaporator bypass flow path 2251 is connected to circulation flow path 2250 so as to bypass in-vehicle evaporator 2204. Second expansion valve 2205 is provided in the in-vehicle evaporator bypass flow path 2251.

Refrigeration circuit 2200 further includes a manifold 2207, a receiver dryer 2208, and an internal heat exchanger 2209.

Manifold 2207 is provided in circulation flow path 2250. Receiver dryer 2208 is connected to manifold 2207. Internal heat exchanger 2209 is connected to: a portion on the upstream side of first expansion valve 2203 in circulation flow path 2250; and a portion on the downstream side of in-vehicle evaporator 2204 in circulation flow path 2250.

The following describes heat medium circuit 2100. Heat medium circuit 2100 includes a first circuit 2110, a second circuit 2120, a third flow path 2131, a radiator 2132, a reservoir tank 2133, a fourth flow path 2141, a chiller 2206, a fifth flow path 2151, and a switching device 2170. Switching device 2170 has ports P61 to P65.

First circuit 2110 includes a first flow path 2111, a power storage device (battery) 2112, a first pump 2113, and fourth flow path 2141.

First flow path 2111 is a flow path through which the heat medium flows. Power storage device 2112 is connected to first flow path 2111 to exchange heat with the heat medium flowing through first flow path 2111. In other words, power storage device 2112 is in thermal contact with first flow path 2111. First pump 2113 is provided in first flow path 2111.

Second circuit 2120 includes a second flow path 2121, a second pump 2122, a drive device, and fourth flow path 2141.

In the circuit mode shown in Fig. 39, the heat medium having flowed out of switching device 2170 (port P64 described later) flows through fourth flow path 2141, and then is branched at a branch portion 2115 into first flow path 2111 and second flow path 2121. In other words, first flow path 2111 and second flow path 2121 are connected to switching device 2170 to be parallel to each other.

Second flow path 2121 is a flow path through which the heat medium flows. Second pump 2122 is provided in second flow path 2121.

The drive device supplies drive power to electrical equipment (electrically powered vehicle 1a). The drive device is connected to second flow path 2121 to exchange heat with the heat medium flowing through second flow path 2121. In other words, the drive device is in thermal contact with second flow path 2121. The drive device is connected to a portion on the downstream side of second pump 2122 in second flow path 2121. In the sixth embodiment, the drive device includes a front inverter 2123, a front electric motor 2124, a DC-DC converter 2125, a rear inverter 2126, and a rear electric motor 2127. An ADAS (advanced driver assistance system)-ECU (electronic control unit) 2128 is connected to second flow path 2121.

Third flow path 2131 is a flow path through which the heat medium flows. Radiator 2132 and reservoir tank 2133 are provided in third flow path 2131.

Fourth flow path 2141 is a flow path through which the heat medium flows. Chiller 2206 is connected to fourth flow path 2141 and in-vehicle evaporator bypass flow path 2251. Chiller 2206 causes the heat medium flowing through fourth flow path 2141 to exchange heat with the working medium flowing through in-vehicle evaporator bypass flow path 2251.

Switching device 2170 is capable of switching the state of connection between flow paths 2111, 2121, 2131, 2141, and 2151. In the sixth embodiment, switching device 2170 is formed of a five-way valve.

As shown in Fig. 39, one end portion of first flow path 2111 is connected to port P62 of switching device 2170. The heat medium having flowed through first flow path 2111 flows into switching device 2170 from port P62. The other end portion of first flow path 2111 is connected to branch portion 2115.

One end portion of second flow path 2121 is connected to port P61 of switching device 2170. The heat medium having flowed through second flow path 2121 flows into switching device 2170 from port P61. The other end portion of second flow path 2121 is connected to branch portion 2115.

One end portion of third flow path 2131 is connected to port P65 of switching device 2170. The heat medium having flowed out of port P65 flows through third flow path 2131. The other end portion of third flow path 2131 is connected to a portion between second pump 2122 and branch portion 2115 in second flow path 2121.

One end portion of fourth flow path 2141 is connected to port P64 of switching device 2170. The heat medium having flowed out of port P64 flows through fourth flow path 2141. The other end portion of fourth flow path 2141 is connected to branch portion 2115.

One end portion of fifth flow path 2151 is connected to port P63 of switching device 2170. The heat medium having flowed out of port P63 flows through fifth flow path 2151. The other end portion of fourth flow path 2141 is connected to a portion between branch portion 2115 and first pump 2113.

Switching device 2170 is capable of switching the mode of thermal management circuit 2200 to: a warming mode to warm power storage device 2112; a cooling mode to cool power storage device 2112; an in-vehicle cooling mode; an in-vehicle heating mode; or a mode obtained by combining these modes. Fig. 39 shows a mode obtained by combining the warming mode to warm power storage device 2110 and the in-vehicle heating mode.

When power storage device 2112 is raised in temperature, ECU 500 controls switching device 2170 such that the mode shown in Fig. 39 is set. In this mode, ports P61, P62, and P64 are opened while ports P63 and P65 are closed. Then, first pump 2113 and second pump 2122 are driven.

Thus, as indicated by arrows in Fig. 39, the heat medium having flowed out of port P64 of switching device 2170 into fourth flow path 2141 is branched at branch portion 2115, and then flows toward first pump 2113 and second pump 2122. The heat medium pressurized by first pump 2113 exchanges heat with power storage device 2112 to warm power storage device 2112, and then flows into port P62 of switching device 2170. The heat medium pressurized by second pump 2122 exchanges heat with the drive device to absorb heat from the drive device, and then flows into port P61 of switching device 2170. On the other hand, in the above-mentioned mode, ports P63 and P65 are closed, and thus, the heat medium does not flow through third flow path 2131 and fifth flow path 2151.

As described above, when power storage device 2112 is raised in temperature, switching device 2170 forms: first circuit 2110 in which the heat medium circulates through first flow path 2111, fourth flow path 2141, and switching device 2170; and second circuit 2120 in which the heat medium circulates through second flow path 2121, fourth flow path 2141, and switching device 2170, and also separates third flow path 2131 from first circuit 2110 and second circuit 2120.

ECU 500 preferably drives second pump 2122 upon satisfaction of the heat receiving condition on which power storage device 2112 receives heat from the heat medium. In other words, second pump 2122 is preferably activated upon satisfaction of the heat receiving condition on which power storage device 2112 receives heat from the heat medium.

For example, the heat receiving condition may be set as a condition that the temperature of the heat medium flowing through the portion on the downstream side of the drive device in second flow path 2121 is equal to or higher than the temperature of power storage device 2112. The temperature of power storage device 2112 is detected, for example, by a temperature sensor 2181 provided in power storage device 2112. The temperature of the heat medium flowing through the portion on the downstream side of the drive device in second flow path 2121 is detected, for example, by a temperature sensor 2182 provided at an inlet portion of switching device 2170 (port P61) in first flow path 2121.

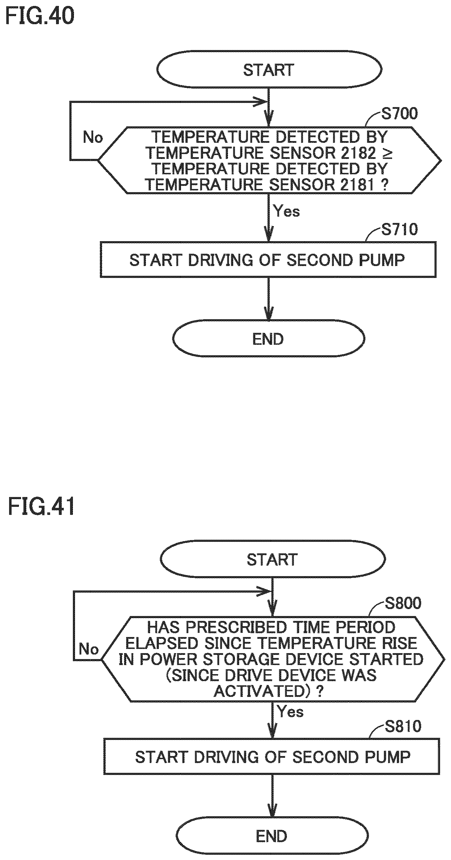

Specifically, as shown in Fig. 40, it is determined whether or not the temperature detected by temperature sensor 2182 is equal to or higher than the temperature detected by temperature sensor 2181 (step S700). When the temperature detected by temperature sensor 2182 is equal to or higher than the temperature detected by temperature sensor 2181 (YES in S700), driving of second pump 2122 is started (step S710). When the temperature detected by temperature sensor 2182 is lower than the temperature detected by temperature sensor 2181 (NO in S700), the process in step S700 is repeated.

Alternatively, the heat receiving condition may be set as a condition that a prescribed time period has elapsed since the temperature rise in power storage device 2112 started (since the drive device was activated). In other words, second pump 2122 may be driven with a delay from the temperature rise in power storage device 2112 (from the activation of the drive device). In this case, the prescribed time period may be set as a time period during which the temperature of the heat medium flowing into port P61 of switching device 2170 from second flow path 2121 become approximately equal to the temperature of power storage device 2112.

Specifically, as shown in Fig. 41, it is determined whether or not a prescribed time period has elapsed since the temperature rise in power storage device 2112 started (since the drive device was activated) (step S800). When the prescribed time period has elapsed since the temperature rise in power storage device 2112 started (since the drive device was activated) (YES in S800), driving of second pump 2122 is started (step S810). When the prescribed time period has not elapsed since the temperature rise in power storage device 2112 started (since the drive device was activated) (NO in S800), the process in step S800 is repeated.

As described above, in the sixth embodiment, during the self-heating of power storage device 2112, first circuit 2110 and second circuit 2120 are formed and third flow path 2131 is separated from first circuit 2110 and second circuit 2120. Thus, the heat from the drive device received by the heat medium in second flow path 2121 is effectively supplied to power storage device 2112. This makes it possible to achieve both effective use of the heat generated from the drive device and efficient self-heating of power storage device 2112.

It should be understood that the embodiments disclosed herein are illustrative and non-restrictive in every respect. The scope of the present disclosure is defined by the terms of the claims rather than the above description of the embodiments, and is intended to include any modifications within the meaning and scope equivalent to the terms of the claims.

### REFERENCE SIGNS LIST

1, 2, 3, 4 thermal management system, 1a electrically powered vehicle (electrical equipment), 10, 11, 12, 13 first closed circuit (second connection flow path), 20, 21, 22, 23 second closed circuit (third connection flow path), 30, 31, 32, 33, 34, 35, 36, 37 third closed circuit (first connection flow path), 114 heater core (air conditioning circuit), 122 low-temperature radiator (radiator), 130a, 230a, 230c, 230d flow path (third flow path), 130b, 260a, 260b, 260c flow path (second flow path), 131, 261 water pump (pump), 133, 263 PCU (drive device), 134, 264 oil cooler (drive device), 137, 266 heat medium temperature sensor (second temperature sensor), 160, 220 chiller (chiller device), 170a, 210a, 210b, 210c flow path (fourth flow path), 170b, 270a, 270b, 270c flow path (first flow path), 173, 272 battery (power storage device), 175, 273 battery temperature sensor (first temperature sensor), 180, 190 five-way valve (switching device), 231 radiator, 240 refrigeration cycle (air conditioning circuit), 280 eight-way valve (switching device), 380, 390 six-way valve (switching device), 480 ten-way valve (switching device), 1101 compressor, 1102 expansion valve, 1103 heat exchanger, 1109 expansion opening/closing valve (switching device), 1110 power storage device, 1150 first circulation flow path, 1151 power storage device bypass flow path, 1170 in-vehicle condenser (condenser), 1171 first opening/closing valve (switching device), 1172 second opening/closing valve (switching device), 1173 third opening/closing valve (switching device), 1201 pump, 1202 radiator, 1210 drive device, 1250 second circulation flow path, 1251 radiator bypass flow path, 1271 three-way valve (switching device), 2110 first circuit, 2111 first flow path, 2112 power storage device, 2113 first pump, 2120 second circuit, 2121 second flow path, 2122 second pump, 2123 front inverter (drive device), 2124 front electric motor (drive device), 2125 DC-DC converter (drive device), 2126 rear inverter (drive device), 2127 rear electric motor (drive device), 2128 ADAS-ECU (drive device), 2131 third flow path, 2132 radiator, 2141 fourth flow path, 2170 switching device, 2206 chiller.

## Claims

1. A thermal management system provided in electrical equipment, the thermal management system comprising:
a first flow path, a second flow path, a third flow path, and a fourth flow path, a heat medium being able to flow through the first flow path, the second flow path, the third flow path, and the fourth flow path;
a power storage device that exchanges heat with the heat medium in the first flow path;
a drive device that exchanges heat with the heat medium in the second flow path and is capable of generating drive power;
a radiator provided in the third flow path;
a chiller device provided in the fourth flow path; and
a switching device that is capable of switching a state of connection between the first flow path, the second flow path, the third flow path, and the fourth flow path, wherein
a first flow path circuit is formed in which
the first flow path, the second flow path, and the fourth flow path are connected to form a first connection flow path, and
the radiator is separated and independent from the first connection flow path,
the first flow path circuit serves as a temperature rising circuit, and
when the power storage device is raised in temperature, the switching device forms the temperature rising circuit.

2. The thermal management system according to claim 1, wherein
the electrical equipment is an electrically powered vehicle, and
the power storage device is raised in temperature when a traveling system of the electrically powered vehicle is activated.

3. The thermal management system according to claim 1, wherein
the power storage device is configured to be capable of external charging with charging power supplied from a charging facility external to the electrical equipment, and
the power storage device is raised in temperature such that a temperature of the power storage device becomes equal to or higher than a prescribed temperature when the external charging is started.

4. The thermal management system according to any one of claims 1 to 3, further comprising a pump provided in the second flow path to circulate the heat medium, wherein
when the power storage device is raised in temperature, an output of the pump is increased with time.

5. The thermal management system according to any one of claims 1 to 3, further comprising:
a first temperature sensor that detects a temperature of the power storage device;
and
a second temperature sensor that detects a temperature of the heat medium in the second flow path, wherein
when the power storage device is raised in temperature, and in a case where a value detected by the second temperature sensor is larger than a value detected by the first temperature sensor, the switching device forms the temperature rising circuit.

6. The thermal management system according to any one of claims 1 to 3, wherein
the electrical equipment is an electrically powered vehicle,
the chiller device is configured to exchange heat with an air conditioning circuit that adjusts a room temperature of the electrically powered vehicle, and
when the power storage device is raised in temperature, and in a case where there is a request for heating with use of the air conditioning circuit and an outside air temperature is equal to or lower than a prescribed threshold value, the switching device forms the temperature rising circuit.

7. The thermal management system according to claim 6, wherein
the switching device forms the temperature rising circuit in a case where the outside air temperature becomes equal to or lower than the prescribed threshold value when the power storage device is raised in temperature in a state in which a second connection flow path and a third connection flow path are separated and independent from each other,
in the second connection flow path, the first flow path and the second flow path are connected to each other, and
in the third connection flow path, the third flow path and the fourth flow path are connected to each other.

8. A thermal management system provided in electrical equipment, the thermal management system comprising:
a compressor that compresses a working medium;
an expansion valve that expands the working medium discharged from the compressor;
a heat exchanger that exchanges heat between a heat medium and the working medium flowing out of the expansion valve;
a first circulation flow path through which the working medium circulates, the first circulation flow path connecting in an order of the compressor, the expansion valve, and the heat exchanger;
a power storage device connected to the first circulation flow path to exchange heat with the working medium flowing through a portion between the compressor and the expansion valve in the first circulation flow path;
a power storage device bypass flow path provided to bypass the power storage device;
a condenser that condenses the working medium discharged from the compressor, the condenser being provided in the power storage device bypass flow path;
a pump that pressurizes the heat medium flowing out of the heat exchanger;
a radiator that cools the heat medium discharged from the pump;
a second circulation flow path through which the heat medium circulates, the second circulation flow path connecting in an order of the heat exchanger, the pump, and the radiator;
a drive device that supplies drive power to the electrical equipment, the drive device being connected to the second circulation flow path to exchange heat with the heat medium flowing through a portion between the radiator and the heat exchanger in the second circulation flow path;
a radiator bypass flow path connected to the second circulation flow path to bypass the radiator; and
a switching device that is capable of switching a flow path through which the heat medium flows, wherein
when the power storage device is raised in temperature, the switching device connects the first circulation flow path to the power storage device bypass flow path and disconnects the radiator from the second circulation flow path, and
the compressor is activated upon satisfaction of a heat receiving condition on which the working medium receives heat from the heat medium in the heat exchanger.

9. The thermal management system according to claim 8, wherein the heat receiving condition is set as a condition that a prescribed time period has elapsed since activation of at least one of the pump and the drive device.

10. The thermal management system according to claim 8 or 9,
wherein the heat receiving condition is set as a condition that a temperature of the heat medium flowing into the heat exchanger is equal to or higher than a temperature of the working medium flowing into the heat exchanger.

11. A thermal management system provided in electrical equipment, the thermal management system comprising:
a first flow path, a second flow path, a third flow path, and a fourth flow path, a heat medium being able to flow through the first flow path, the second flow path, the third flow path, and the fourth flow path;
a power storage device that exchanges heat with the heat medium flowing through the first flow path;
a drive device that exchanges heat with the heat medium flowing through the second flow path and supplies drive power to the electrical equipment;
a radiator provided in the third flow path;
a chiller provided in the fourth flow path; and
a switching device that is capable of switching a state of connection between the first flow path, the second flow path, the third flow path, and the fourth flow path, wherein
the first flow path and the second flow path are connected to the switching device to be parallel to each other, and
when the power storage device is raised in temperature, the switching device
forms a first circuit in which the heat medium circulates through the first flow path, the fourth flow path, and the switching device,
forms a second circuit in which the heat medium circulates through the second flow path, the fourth flow path, and the switching device, and
separates the third flow path from the first circuit and the second circuit.

12. The thermal management system according to claim 11, further comprising:
a first pump provided in the first flow path; and
a second pump provided in the second flow path, wherein
the second pump is activated upon satisfaction of a heat receiving condition on which the power storage device receives heat from the heat medium.

13. The thermal management system according to claim 12, wherein the heat receiving condition is set as a condition that a prescribed time period has elapsed since activation of the drive device.

14. The thermal management system according to claim 12 or 13,
wherein the heat receiving condition is set as a condition that a temperature of the heat medium flowing through a portion on a downstream side of the drive device in the second flow path is equal to or higher than a temperature of the power storage device.
